# EUROPÄISCHE PATENTANMELDUNG

(11) **EP 4 450 220 A1**
(43) Veröffentlichungstag der Anmeldung: **23.10.2024**
(21) Anmeldenummer: 24167936.4
(22) Anmeldetag: 29.03.2024
(51) Int. Cl.: B24B 13/005, B24B 41/06

(54) **ELASTISCHE MEMBRAN FÜR EINE AUFNAHME ZUR BEARBEITUNG VON OPTISCHEN WERKSTÜCKEN, INSBESONDERE BRILLENLINSEN, UND DAMIT AUSGESTATTETE AUFNAHME**

(30) Priorität: 20.04.2023 DE 102023110129
(71) Anmelder: Satisloh AG, 6340 Baar (CH)
(72) Erfinder: Schäfer, Holger, D-35789 Weilmünster (DE); Lautz, Martin, D-35580 Nauborn (DE); Claar, Johannes, D-35085 Ebsdorfergrund (DE)
(74) Vertreter: Oppermann, Mark

(57) **Zusammenfassung**

Eine elastische Membran (12) für eine Aufnahme (10) zur Bearbeitung von optischen Werkstücken (14) ist über einen Befestigungsabschnitt (28) zur Montage an einem Gehäuse (26) der Aufnahme angepasst, um darin eine Kammer (34) durch einen mit dem Befestigungsabschnitt verbundenen Aufnahmeabschnitt (30) zu begrenzen. Letzterer hat eine Außenseite (32), auf der ein Werkstück mit einer Werkstückfläche (16) flächig auflegbar ist, und eine Innenseite (40), die zur Anlage einer in der Kammer aufgenommenen Abstützanordnung (24) für das Werkstück angepasst ist. Der Aufnahmeabschnitt besitzt als Bestandteil einer Halteanordnung (22) für das Werkstück eine Perforation (44) mit wenigstens einer Innenseite und Außenseite verbindenden Öffnung (46), über die ein an der Kammer angelegtes Vakuum auf die Außenseite führbar ist. Der Öffnung ist eine semipermeable, d.h. gasdurchlässige und flüssigkeitssperrende Funktionsmembran (48) zugeordnet, welche sich lediglich lokal, in einem unmittelbar an der Öffnung angrenzenden Bereich erstreckt. Eine Aufnahme mit einer solchen elastischen Membran wird ebenfalls offenbart.

## Beschreibung

### TECHNISCHES GEBIET

Die vorliegende Erfindung bezieht sich allgemein auf eine elastische Membran für eine Aufnahme zur Bearbeitung von optischen Werkstücken sowie eine damit ausgestattete Aufnahme. Insbesondere bezieht sich die Erfindung auf eine elastische Membran für eine Aufnahme zur Bearbeitung von Brillenlinsen, vorzugsweise Brillenlinsen aus Kunststoff, wie etwa Polycarbonat, CR39 oder sogenannten "High Index" Materialien, grundsätzlich aber auch für Brillenlinsen aus sprödharten Materialien, wie z.B. Mineralglas. Derartige Brillenlinsen werden in sogenannten "RX-Werkstätten", d.h. Produktionsstätten zur Fertigung von individuellen Brillenlinsen nach Rezept in sehr großem Umfang hergestellt.

Die hier beschriebene elastische Membran bildet die in der älteren deutschen Patentanmeldung DE 10 2021 005 202.1 (DE 10 2021 005 202 A1) derselben Anmelderin (u.a.) beschriebene elastische Membran für eine Aufnahme zur Bearbeitung von insbesondere Brillenlinsen weiter und eignet sich beispielsweise sehr gut für den Einsatz in einem Verfahren zur spanenden (Flächen) Bearbeitung von insbesondere Brillenlinsen aus Kunststoff, wie es in der Druckschrift DE 10 2021 004 831 A1 beschrieben ist. Ferner kann die hier beschriebene elastische Membran speziell an einer "Aufnahme für die Bearbeitung von optischen Werkstücken, insbesondere Brillenlinsen" zum Einsatz kommen, wie sie Gegenstand der zeitgleich unter diesem Titel eingereichten deutschen Patentanmeldung DE 10 2023 110 130.7 derselben Anmelderin ist. Auf die vorerwähnten Unterlagen (DE 10 2021 005 202 A1, DE 10 2021 004 831 A1, DE 10 2023 110 130.7) wird an dieser Stelle bezüglich der strukturellen Details der Aufnahme sowie den Einsatz- und Verfahrensdetails ausdrücklich Bezug genommen.

### STAND DER TECHNIK

In der oben erwähnten Druckschrift DE 10 2021 004 831 A1 wird bereits ausführlich beschrieben, welche Prozessschritte derzeit regelmäßig in RX-Werkstätten bei der industriellen Fertigung von Brillenlinsen durchlaufen werden, so dass das übliche Vorgehen an dieser Stelle nur kurz umrissen werden soll. Ausgangsprodukt bei der industriellen Fertigung von Brillenlinsen ist ein halbfertiger Brillenlinsenrohling, auch "Blank" genannt, der eine bereits fertigbearbeitete, spritzgusstechnisch vorbereitete oder auf andere Weise vorgeformte optisch wirksame Fläche aufweist und an seiner anderen optisch wirksamen Fläche und dem Rand zwischen den optischen wirksamen Flächen zu einer fertigen Brillenlinse zu bearbeiten ist.

Nach einem Schutz der vorgeformten optisch wirksamen Fläche mittels einer Schutzfolie oder eines Schutzlacks erfolgt das sogenannte "Blocken" des jeweiligen Brillenlinsenrohlings, der dabei mit einem geeigneten, sogenannten "Blockstück", z.B. einem Blockstück gemäß der deutschen Norm DIN 58766 verbunden wird. Beim Blocken werden zuerst Position und ggf. Form des Brillenlinsenrohlings messtechnisch bestimmt, bevor der Brillenlinsenrohling dann in sechs Freiheitsgraden relativ zu dem Blockstück positioniert wird, so dass das Blockstück eine vorgegebene Position gegenüber der geschützten, vorgeformten Fläche des Brillenlinsenrohlings einnimmt. Anschließend erfolgt die Fixierung dieser eingestellten Position durch Auffüllen des Raums zwischen Blockstück und Brillenlinsenrohling mit einem herkömmlichen geschmolzenen Material ("Alloy" oder Wachs, siehe z.B. EP 1 593 458 A2) oder alternativ mittels eines geeigneten thermoplastischen, duroplastischen oder elastomeren Kunststoffs oder Klebstoffs (siehe z.B. DE 10 2007 007 161 A1, EP 2 011 604 A1, WO 2009/135689 A1). Nach Erstarren bzw. Aushärten des Füllmaterials stellt das Blockstück eine Aufnahme oder Maschinenschnittstelle zur Bearbeitung des Brillenlinsenrohlings dar, die nachfolgend bei mehreren Bearbeitungsvorgängen in verschiedenen Maschinen an der Brillenlinse verbleibt, um Letztere dabei drehend antreiben zu können und in stets definierter Lage zuverlässig zu halten.

Im nächsten Schritt, dem sogenannten "Generieren", erhält die vorher noch nicht bearbeitete optisch wirksame Fläche des jeweiligen Brillenlinsenrohlings in einer speziellen Bearbeitungsmaschine, auch "Generator" genannt (siehe z.B. EP 1 719 585 A2, EP 2 011 603 A1), durch spanende (Vor)Bearbeitung - bei Kunststoff i.d.R. Fräsen und/oder Drehen mit geometrisch bestimmter Schneide - ihre Makrogeometrie, d.h. die optisch aktive Form gemäß Rezept. Dabei wird der geblockte Brillenlinsenrohling mittels des Blockstücks an einer drehend angetriebenen Werkstückspindel gehalten. Das Generieren umfasst regelmäßig wenigstens zwei Teilschritte (siehe z.B. EP 1 203 626 B1), nämlich eine Randvorbearbeitung, auch Vorranden oder "Cribbing" genannt, bei welcher der Rand des Brillenlinsenrohlings vom sogenannten "Rohdurchmesser" auf den sogenannten "Fertigdurchmesser" bearbeitet wird - bei Kunststoff etwa mittels eines Tellerfräsers (vgl. z.B. EP 0 758 571 B1) - und eine sich daran anschließende Flächenbearbeitung. Letztere kann bei Kunststoff mit (wenigstens) einem Fräsergang über die Fläche beginnen, wonach die Hauptmenge des zu entfernenden Rohlingsmaterials bereits abgetragen ist, gefolgt zumeist von einer "unrunden" Drehbearbeitung unter Zuhilfenahme einer sogenannten "Fast-Tool"-Anordnung (siehe z.B. EP 1 779 967 A2) zum reziprozierenden Antrieb einer Diamant-Drehschneide, um (auch) nicht-rotationssymmetrische Flächenabschnitte - z.B. Freiformflächen bei Gleitsichtbrillen - am Halbzeug anzuarbeiten. Voraussetzung für die angesprochene Randvorbearbeitung mittels Fräser ist, dass das an der Frontseite des Brillenlinsenrohlings temporär angebrachte Blockstück einen maximalen Durchmesser kleiner dem Fertigdurchmesser des Werkstücks aufweist, da es ansonsten zu einer Kollision zwischen Fräswerkzeug und Blockstück kommen würde.

Sodann erfolgt die allgemein als "Polieren" bezeichnete (mikro) spanende Feinbearbeitung der Brillenlinsen, bei der die vorbearbeitete optisch wirksame Fläche des jeweiligen Halbzeugs die gewünschte Mikrogeometrie (Oberflächengüte) erhält, und zwar mittels geometrisch unbestimmter Schneide. Hierfür wird das spanend vorbearbeitete, geblockte Halbzeug aus dem Generator entnommen und in einer Feinbearbeitungs- bzw. Poliermaschine weiterbearbeitet (siehe beispielsweise EP 2 308 644 A2). Dabei erfolgt die Positionierung und Fixierung des Halbzeugs in der Poliermaschine ebenfalls mittels des Blockstücks (siehe z.B. EP 1 473 116 A1). Bei der Polierbearbeitung wird unter Zugabe eines flüssigen, mit abrasiven Partikeln versehenen Poliermittels vermittels eines flexiblen Polierwerkzeugs bzw. -tellers (siehe etwa EP 1 698 432 A2, WO 2016/058661 A1) in definierten Bahnen über die vorbearbeitete Fläche gefahren, um die Oberflächenrauigkeit zu verringern.

Als nächster optionaler Prozessschritt erfolgt das Markieren des Halbzeugs, wobei etwa mittels eines Laserstrahls oder mechanisch mittels eines Gravierstichels (siehe z.B. EP 1 916 060 B1) beispielsweise zwei kleine Kreise auf der rückseitigen Fläche des Halbzeugs erzeugt werden. Dies ist etwa bei Freiformflächen notwendig, um über die eingebrachten Markierungen die Lage des Halbzeugs in späteren Prozessschritten sicher zu finden. Da hier eine hohe Genauigkeit in der Positionierung gefordert ist, erfolgt auch beim Markieren die Positionierung und Fixierung vermittels des Blockstücks.

Erst nach dieser Bearbeitung wird das Halbzeug vom Blockstück getrennt. Das sogenannte "Abblocken" erfolgt beispielsweise im Falle der vorerwähnten Klebeverbindung mittels eines von einer Düse abgegebenen Hochdruck-Wasserstrahls, der auf einer Randstelle zwischen Blockstück und Halbzeug auftrifft, um das Halbzeug vom Blockstück durch Aufbringung hydraulischer Kräfte zu lösen (siehe z.B. WO 2011/042091 A1, WO 2011/107227 A1). In der Folge liegt nun das bearbeitete Halbzeug einzeln vor, das abgetrennte Blockstück wird gereinigt und an den Prozessschritt Blocken zurückgeführt.

In der weiteren Bearbeitung wird das Halbzeug nach Reinigung optional an seiner Front- und/oder Rückseite zur Erzielung zusätzlicher Wirkungen - Erhöhung der Kratzfestigkeit durch Hartbeschichtung, Antireflexionseigenschaften, Farbe, Verspiegelung, hydrophobe Eigenschaften, etc. - beschichtet.

Als finaler Prozessschritt wird schließlich das sogenannte "Edgen" durchgeführt, bei dem das Halbzeug am Rand zur Einpassung in ein gewünschtes Brillengestell erneut bearbeitet wird, so dass es die Form der jeweiligen Brillenfassung erhält. Da das Halbzeug nun nicht mehr auf dem Blockstück fixiert ist, muss hier die Position erneut festgestellt werden (beispielsweise anhand der vorerwähnten Markierungen), bevor das Halbzeug geeignet fixiert und in einem sogenannten "Edger" als Randbearbeitungsvorrichtung (siehe z.B. EP 1 243 380 A2) im Hinblick auf seine Randform und Befestigung im Brillengestell final bearbeitet werden kann.

Die insoweit umrissene Prozesskette aus dem Stand der Technik beinhaltet mit den Schritten "Blocken" und "Abblocken" zwei Abläufe, die notwendige Hilfsprozesse darstellen, selbst aber den Wert der hergestellten Brillenlinse nicht steigern. Wünschenswert wäre also eine Prozesskette, die ohne diese Hilfsprozesse auskommt. Insbesondere zur Effizienzsteigerung und auch aus ökologischen Erwägungen wurde im Stand der Technik bereits vorgeschlagen, bei der Herstellung der optisch wirksamen Flächen von Brillenlinsen "blocklos" zu arbeiten, wobei die Brillenlinsen bei der Bearbeitung mittels spezieller Haltevorrichtungen bzw. Aufnahmen gehalten werden (siehe z.B. WO 2015/059007 A1, US 9,969,051 B2, DE 10 2016 112 999 A1, DE 10 2004 016 445 B4).

Wie in der bereits eingangs erwähnten, älteren deutschen Patentanmeldung DE 10 2021 005 202.1 (DE 10 2021 005 202 A1) ausführlich diskutiert - worauf an dieser Stelle nochmals verwiesen sei - besteht bei den vorbekannten Haltevorrichtungen bzw. Aufnahmen allerdings die Gefahr, dass die Brillenlinsen bei bzw. während der Bearbeitung unerwünschte elastische Verformungen oder Durchbiegungen erfahren, sei es infolge nicht abgestützter Hohlräume unter der jeweiligen Linse, in die die Linse unter den wirkenden Bearbeitungskräften hinein verformt wird (WO 2015/059007 A1, US 9,969,051 B2), oder aufgrund eines mechanischen Spannens am Umfangsrand der jeweiligen Linse mit radial gerichteten Spannkräften (DE 10 2016 112 999 A1, DE 10 2004 016 445 B4). Dies kann namentlich bei der Bearbeitung im Verhältnis dünner Linsen zu nicht tolerablen Abweichungen zwischen der an der Rückfläche erzeugten Ist-Geometrie und der dort gewünschten Soll-Geometrie führen, die sich dann bemerkbar machen, wenn die Linse nach der Bearbeitung wieder "ausfedert". Solche der Bearbeitungsqualität abträglichen, haltesystembedingten Linsenverformungen sind insbesondere dann kritisch, wenn im Verhältnis komplexe Flächengeometrien, d.h. andere als bloß sphärische oder torische Flächen herzustellen sind.

Um vor diesem Hintergrund das Werkstück bei der Werkstückbearbeitung in prozesssicherer Weise sowie ohne der Bearbeitungsqualität abträgliche Werkstückverformungen zu halten und zu unterstützen, wird in der älteren deutschen Patentanmeldung DE 10 2021 005 202.1 (DE 10 2021 005 202 A1) eine spezielle Aufnahme für die Bearbeitung von optischen Werkstücken, insbesondere Brillenlinsen, mit jeweils zwei Werkstückflächen und einem Werkstückrand dazwischen vorgeschlagen. Diese Aufnahme umfasst eine Halteanordnung für ein zu bearbeitendes Werkstück sowie eine Abstützanordnung für das zu bearbeitende Werkstück. Die Abstützanordnung hat in der hier offenbarten Ausgestaltung eine an einem Gehäuse montierte, gummielastische Membran, welche einen Aufnahmeabschnitt besitzt, auf dessen Außenseite das Werkstück mit einer seiner Werkstückflächen flächig auflegbar ist. Die Membran begrenzt zusammen mit dem Gehäuse eine Kammer, in der eine Vielzahl von separat längsverschiebbaren Stiften der Abstützanordnung aufgenommen ist, welche jeweils mit einem Stiftende an einer Innenseite des Aufnahmeabschnitts der gummielastischen Membran zur Anlage bringbar sind. Ferner sind diese Stifte wahlweise gegen eine Längsverschiebung bezüglich des Gehäuses durch einen quer wirkenden Klemmmechanismus aneinander festlegbar oder mittels eines axial wirkenden Sperrmechanismus blockierbar, um den Aufnahmeabschnitt nach Maßgabe einer Geometrie des mittels der Halteanordnung gehaltenen Werkstücks fest abzustützen.

Eine Besonderheit der Aufnahme in der in der älteren deutschen Patentanmeldung DE 10 2021 005 202.1 (DE 10 2021 005 202 A1) offenbarten Ausgestaltung besteht des Weiteren darin, dass die Halteanordnung für das zu bearbeitende Werkstück in oder an dem Aufnahmeabschnitt der gummielastischen Membran vorgesehen ist und das Werkstück zu halten vermag, ohne am Werkstückrand anzugreifen. Hierfür kann bei dieser Lösung konkret an der Kammer im Gehäuse ein Vakuum angelegt werden, wobei im Aufnahmeabschnitt der gummielastischen Membran eine Perforation als Bestandteil der Halteanordnung ausgebildet ist, so dass das an der Kammer angelegte Vakuum über die Perforation auf der Außenseite des Aufnahmeabschnitts der gummielastischen Membran zum Halten eines zu bearbeitenden Werkstücks ansteht.

In weiterer konkreter Ausgestaltung kann auf der Innenseite des Aufnahmeabschnitts der gummielastischen Membran noch ein semipermeabler Membranabschnitt angeordnet sein, der die Perforation abdeckt, dabei einen Luftaustausch über die Perforation ermöglicht, einen Flüssigkeitsdurchtritt durch die Perforation in die Kammer hingegen verhindert. Ein solcher semipermeabler Membranabschnitt - z.B. in Form einer lipophilen Polymermembran, wie sie in wasserabweisender Regenkleidung zu finden ist - dient hier vor allem als Sicherungselement bzw. zum Systemschutz, wenn im Zuge der Bearbeitung des an der Aufnahme gehaltenen Werkstücks das Werkstück aus irgendwelchen Gründen verloren geht. Dann verhindert der semipermeable Membranabschnitt nämlich, dass die Kammer infolge des anliegenden Vakuums etwa mit einem flüssigen Kühlschmierstoff geflutet wird, was eine ordnungsgemäße Funktion der Abstützanordnung und letztlich der Aufnahme insgesamt gefährden könnte.

Wie in der Fig. 6 der älteren deutschen Patentanmeldung DE 10 2021 005 202.1 (DE 10 2021 005 202 A1) mit einer gepunkteten Linie bei dem Bezugszeichen 112 angedeutet, deckt hierbei der semipermeable Membranabschnitt die Perforation mit ihrer Mehrzahl von Öffnungen im Aufnahmeabschnitt auf der Innenseite der gummielastischen Membran vollflächig ab. Wünschenswert wäre eine Ausgestaltung der gummielastischen Membran mit einem solchen Systemschutz für die Aufnahme, insbesondere ohne dass der Aufnahmeabschnitt der gummielastischen Membran dabei eine übermäßige Versteifung erfährt.

### AUFGABENSTELLUNG

Vor dem Hintergrund des insoweit geschilderten Stands der Technik liegt der Erfindung vornehmlich die Aufgabe zugrunde, insbesondere für eine idealerweise gänzlich blocklos auskommende Herstellprozesskette eine elastische Membran für eine Aufnahme zur Bearbeitung von optischen Werkstücken, namentlich Brillenlinsen bereitzustellen, die allgemein die oben zum Stand der Technik beschriebenen Probleme adressiert und speziell möglichst dauerhaft eine sehr gute Anpassungsfähigkeit der Aufnahme an die daran aufzunehmenden, zu bearbeitenden Werkstücke unterstützt. Die Erfindungsaufgaben umfassen des Weiteren die Bereitstellung einer mit einer solchen elastischen Membran ausgerüsteten Aufnahme für die Bearbeitung von optischen Werkstücken, namentlich Brillenlinsen, die das Werkstück bei der Werkstückbearbeitung in prozesssicherer Weise sowie ohne der Bearbeitungsqualität abträgliche Werkstückverformungen zu halten und zu unterstützen vermag.

### DARSTELLUNG DER ERFINDUNG

Diese Aufgaben werden durch eine elastische Membran für eine Aufnahme zur Bearbeitung von optischen Werkstücken, insbesondere Brillenlinsen, mit den Merkmalen des Patentanspruchs 1 bzw. eine Aufnahme für die Bearbeitung von optischen Werkstücken, insbesondere Brillenlinsen, mit den Merkmalen des Patentanspruchs 15 gelöst. Vorteilhafte oder zweckmäßige Ausgestaltungen und Weiterbildungen der Erfindung sind Gegenstand der abhängigen Patentansprüche.

Gemäß der Erfindung ist zunächst eine elastische Membran für eine Aufnahme zur Bearbeitung von optischen Werkstücken, insbesondere Brillenlinsen, mit jeweils zwei Werkstückflächen und einem Werkstückrand dazwischen, über einen Befestigungsabschnitt zur - hinsichtlich Wartung und Reparatur der Aufnahme bzw. Austausch der Membran gegen eine Ersatzmembran vorzugsweise lösbaren - Montage an einem Gehäuse der Aufnahme angepasst, um darin eine Kammer durch einen mit dem Befestigungsabschnitt verbundenen Aufnahmeabschnitt der elastischen Membran zu begrenzen, welcher eine Außenseite, auf der ein zu bearbeitendes Werkstück mit einer seiner Werkstückflächen flächig auflegbar ist, und eine Innenseite aufweist, die zur Anlage einer in der Kammer der Aufnahme aufgenommenen Abstützanordnung für das Werkstück angepasst ist, wobei der Aufnahmeabschnitt der elastischen Membran als Bestandteil einer Halteanordnung für das Werkstück eine Perforation mit wenigstens einer die Innenseite mit der Außenseite verbindenden Öffnung besitzt, über die ein an der Kammer der Aufnahme angelegtes Vakuum auf die Außenseite führbar ist, und wobei der wenigstens einen Öffnung eine semipermeable Funktionsmembran zugeordnet ist, welche sich lediglich lokal, in einem unmittelbar an der Öffnung angrenzenden Bereich erstreckt und die für Gas durchlässig ist, einem Flüssigkeitsdurchtritt durch die wenigstens eine Öffnung indes entgegenwirkt.

Ein wichtiger Vorteil beim Einsatz der beanspruchten elastischen Membran mit ihrer Perforation als Bestandteil einer Halteanordnung der Aufnahme nach dem Wirkprinzip "Vakuum" besteht zunächst darin, dass die Haltekräfte nicht nur im Hinblick auf ihr Vorhandensein oder Nicht-Vorhandensein (d.h. Haltekraft "ein" oder "aus") im Prozess einfach zu steuern sind, sondern ebenfalls in ihrer Höhe, so dass das Werkstück z.B. in Abhängigkeit von seiner Geometrie und/oder seinem Werkstoff und dessen Eigenschaften und/oder vom Bearbeitungsfortschritt und/oder von den jeweils wirkenden Bearbeitungskräften mehr oder weniger stark am Aufnahmeabschnitt der elastischen Membran gehalten werden kann. Dabei ist eine gute und leichte Steuerbarkeit der Haltekräfte an der Aufnahme auch einer hohen Prozesssicherheit förderlich.

Ferner bietet die elastische Membran den Vorteil, dass das zu bearbeitende Werkstück auf der Aufnahme an seiner aufgenommenen Werkstückfläche ohne großen Aufwand geschützt ist, nämlich durch den Aufnahmeabschnitt der elastischen, insbesondere gummielastischen Membran. Die Verwendung eines vorzugsweise gummiartigen Werkstoffs im Anlagebereich zum Werkstück dient dabei auch dazu, während einer Bearbeitung des Werkstücks infolge eines im Verhältnis hohen Reibbeiwerts auch mögliche Querkräfte und/oder Torsionsmomente aufnehmen zu können, ohne dass es zu einer Querverlagerung bzw. Verdrehung des Werkstücks auf der elastischen Membran kommt, die ggf. auch die Perforation in deren Aufnahmeabschnitt ungewollt freilegen könnte.

Die der wenigstens einen Öffnung der Perforation im Aufnahmeabschnitt der elastischen Membran zugeordnete Funktionsmembran gewährleistet hierbei vorteilhaft den vorerwähnten Systemschutz, indem durch Bereitstellen einer Flüssigkeitssperre verhindert wird, dass in die Kammer der Aufnahme infolge eines anliegenden Vakuums etwa ein flüssiger Kühlschmierstoff angesaugt wird, wenn die Perforation im Aufnahmeabschnitt nicht oder nicht vollständig durch ein auf der Außenseite aufliegendes Werkstück abgedeckt wird.

Dadurch, dass sich die Funktionsmembran - anders als bei der in der älteren deutschen Patentanmeldung DE 10 2021 005 202.1 (DE 10 2021 005 202 A1) offenbarten Lösung - dabei nur in einem Bereich in unmittelbarer Nähe der Öffnung des Aufnahmeabschnitts der elastischen Membran erstreckt, insofern die Perforation im Aufnahmeabschnitt lediglich über eine kleine Fläche teilüberdeckt bzw. dort den Aufnahmeabschnitt teilverstärkt, führt das Vorhandensein der Funktionsmembran nur zu einer unwesentlichen Aussteifung des Aufnahmeabschnitts. Im Ergebnis kann der Aufnahmeabschnitt der elastischen Membran über seine Fläche eine im Wesentlichen konstante, hohe Flexibilität aufweisen und vermag sich insgesamt gut an die aufgelegte Werkstückfläche eines zu bearbeitenden Werkstücks anzupassen bzw. anzuschmiegen. Dies ist im Einsatz der elastischen Membran an der Aufnahme zum einen vorteilhaft der gewünschten vollflächigen Abstützung des zu bearbeitenden Werkstücks förderlich und verhindert zum anderen auch unerwünschte "Abbildungen" oder "Abdrücke" der elastischen Membran auf an der Aufnahme aufgenommenen Werkstücken aus im Verhältnis weichen (Kunststoff)Materialien.

Gemäß einem weiteren Aspekt der Erfindung umfasst eine Aufnahme für die Bearbeitung von optischen Werkstücken, insbesondere Brillenlinsen, mit jeweils zwei Werkstückflächen und einem Werkstückrand dazwischen, ein Gehäuse mit einer Halteanordnung für ein zu bearbeitendes Werkstück sowie einer Abstützanordnung hierfür, die eine Vielzahl von in einer im Gehäuse vorgesehenen Kammer aufgenommenen, mindestens zum Großteil separat längsverschiebbaren Stiften aufweist, welche wahlweise gegen eine Längsverschiebung bezüglich des Gehäuses durch einen Klemmmechanismus festlegbar sind und mit ihren Stiftenden dazu dienen, das mit einer seiner Werkstückflächen über die Halteanordnung an der Aufnahme gehaltene Werkstück an der den Stiftenden zugewandten Werkstückfläche nach Maßgabe deren Geometrie flächig und fest abzustützen, wobei an dem Gehäuse der Aufnahme erfindungsgemäß die vorbeschriebene elastische Membran - vorzugsweise lösbar - montiert ist, die zusammen mit dem Gehäuse die Kammer begrenzt und in deren Aufnahmeabschnitt die Perforation als Bestandteil der Halteanordnung ausgebildet ist, so dass ein an der Kammer angelegtes Vakuum über die Perforation auf der Außenseite des Aufnahmeabschnitts zum Halten des Werkstücks ansteht.

Die erfindungsgemäße Aufnahme kombiniert verschiedene Funktionen, die für eine qualitativ hochwertige Bearbeitung von flächigen Werkstücken wesentlich sind. Flächige Werkstücke, wie etwa Brillenlinsen, zeichnen sich dadurch aus, dass sie in Breiten- und Längenrichtung deutlich größere Abmessungen besitzen als in Dickenrichtung. Diese Werkstückgeometrie hat bei einer spanenden Bearbeitung zur Folge, dass das Werkstück selbst bei insbesondere nahe am Rand des Werkstücks angreifenden, vom Werkstück weggewandten Trennkräften einen verhältnismäßig großen Hebelarm bildet, was die Gefahr birgt, dass das Werkstück bei der Zerspanung von seiner Aufnahme "heruntergehebelt" wird. Zugleich bedingt die im Verhältnis geringe Dicke des Werkstücks speziell ein eher kleines Widerstandsmoment gegen Biegung, mit der Gefahr einer (wenigstens) elastischen Verformung unter den jeweils herrschenden Bearbeitungskräften. Die sich hieraus für eine zuverlässig arbeitende und einer hohen Bearbeitungsqualität förderlichen Werkstückaufnahme ergebenden Anforderungen, nämlich das flächige Werkstück bei der Bearbeitung zum einen zuverlässig zu halten und zum anderen gegen unerwünschte Verformungen hinreichend abzustützen bzw. zu unterstützen, adressiert die erfindungsgemäße Aufnahme mit ihren Halte- und Abstützanordnungen auf besondere Weise.

Hierbei ermöglicht die erfindungsgemäße Ausbildung der Abstützanordnung mit einer Vielzahl von wenigstens größtenteils individuell längsverschieblichen Stiften, deren Stiftenden das mit einer seiner Werkstückflächen über die Halteanordnung an der elastischen Membran der Aufnahme gehaltene Werkstück an der den Stiftenden zugewandten Werkstückfläche nach Maßgabe deren Geometrie flächig und fest abzustützen vermögen, zunächst vorteilhaft eine sehr genaue "Abformung" der auf den Aufnahmeabschnitt der elastischen Membran der Aufnahme aufgelegten Werkstückfläche des aufzunehmenden Werkstücks, bevor die Stifte mittels des Klemmmechanismus geklemmt werden, um eine feste bzw. starre Auflagefläche für das Werkstück bereitzustellen. Irgendwelche größeren Hohlräume, in die das an der Aufnahme aufgenommene Werkstück bei der Bearbeitung "hineinfedern" könnte, liegen erfindungsgemäß unter dem Werkstück also nicht vor.

Diese sehr genaue Abformung der auf den Aufnahmeabschnitt der elastischen Membran aufgelegten Werkstückfläche wird unterstützt durch die vorbeschriebene Ausgestaltung der elastischen Membran, welche mit ihrer/ihren örtlich nur sehr begrenzt vorhandenen Funktionsmembran(en) im Bereich der Öffnung(en) der Perforation im Aufnahmeabschnitt eine hohe Flexibilität besitzt, die über die Fläche gesehen auch im Wesentlichen konstant ist.

Die Effekte und Vorteile der erfindungsgemäß ausgebildeten Halteanordnung der Aufnahme, zu welcher der auf besondere Art und Weise perforierte und funktional ausgestattete Aufnahmeabschnitt der elastischen Membran zählt, wurden oben zur elastischen Membran schon diskutiert, worauf insoweit nochmals verwiesen wird. Weitere Effekte und Vorteile der erfindungsgemäßen Aufnahme sind ferner Gegenstand der bereits eingangs erwähnten, zeitgleich eingereichten deutschen Patentanmeldung DE 10 2023 110 130.7 derselben Anmelderin, auf die an dieser Stelle ebenfalls noch einmal verwiesen sei.

In vorteilhafter Ausgestaltung der elastischen Membran kann vorgesehen sein, dass die wenigstens eine Öffnung der Perforation im Aufnahmeabschnitt in Längsrichtung gesehen querschnittsverschiedene Öffnungsbereiche aufweist und der Querschnitt des jeweiligen Öffnungsbereichs auf der Außenseite des Aufnahmeabschnitts kleiner ist als auf der Innenseite des Aufnahmeabschnitts und/oder dass die wenigstens eine Öffnung der Perforation im Aufnahmeabschnitt auf der Außenseite des Aufnahmeabschnitts einen im Wesentlichen runden Öffnungsbereich besitzt, mit einem Durchmesser größer gleich 0,5 mm und kleiner gleich 3,0 mm, und/oder dass die wenigstens eine Öffnung der Perforation im Aufnahmeabschnitt auf der Innenseite des Aufnahmeabschnitts einen Öffnungsbereich besitzt, der einen sternförmigen Querschnitt hat oder im Wesentlichen rund ist, mit einem Durchmesser größer gleich 1,5 mm und kleiner gleich 4,0 mm, und/oder dass die wenigstens eine Öffnung der Perforation im Aufnahmeabschnitt eine bezüglich der Mittelachse der elastischen Membran zentrale Öffnung und/oder zwischen 3 und 18 Öffnungen im Aufnahmeabschnitt umfasst, die um die Mittelachse der elastischen Membran vorzugsweise gleichmäßig winkelbeabstandet voneinander auf wenigstens einem Teilkreis - bis zu z.B. 3 Teilkreisen - verteilt sind, und/oder dass die wenigstens eine Öffnung der Perforation im Aufnahmeabschnitt nur eine oder wenige - beispielsweise bis zu 7 - Öffnungen umfasst, die auf der Außenseite des Aufnahmeabschnitts in einer in einer Draufsicht gesehen kristall- oder wabenförmigen Verteilungsstruktur aus flachen, furchenartigen Vertiefungen für das Vakuum münden.

Grundsätzlich kann die oder jede Öffnung der Perforation über die Länge gesehen zwar einen konstanten Querschnitt besitzen. Querschnittsverschiedene Öffnungsbereiche an einer Öffnung hingegen - wie beansprucht - bieten jedoch den Vorteil, dass insbesondere bei der Verwendung von längsverschiebbaren Stiften in der Abstützanordnung der Aufnahme, die zur Erzielung einer möglichst hohen "Auflösung" einen im Verhältnis kleinen Durchmesser besitzen, die Gefahr reduziert werden kann, dass ein Stift die oder eine Öffnung der Perforation auf der Innenseite des Aufnahmeabschnitts gänzlich verdeckt bzw. "verstopft", was ein Führen des Vakuums auf die Außenseite des Aufnahmeabschnitts der elastischen Membran be- oder verhindern könnte.

Den Querschnitt der äußeren und/oder inneren Öffnungsbereiche der wenigstens einen Öffnung der Perforation in einer bevorzugten Ausführung rund zu gestalten, bietet insbesondere den Vorteil einer besonders einfachen Herstellung auf z.B. eine stanztechnische Art und Weise. Andere Querschnittsformen der in Rede stehenden Öffnungsbereiche sind indes ebenfalls denkbar. Beispielsweise ist ein Öffnungsbereich mit einem sternförmigen Querschnitt auf der Innenseite des Aufnahmeabschnitts wiederum vorteilhaft im Hinblick auf einen durch die längsverschiebbaren Stifte der Abstützanordnung möglichst ungehinderten Luftdurchtritt durch die Perforation im Aufnahmeabschnitt der elastischen Membran.

Der Durchmesser des runden Öffnungsbereichs auf der Außenseite des Aufnahmeabschnitts sollte so gewählt sein, dass er einerseits möglichst kleiner ist als ein Durchmesser der längsverschiebbaren Stifte der Abstützanordnung, so dass nicht die Gefahr besteht, dass ein Stift die Öffnung durchdringt, was zu einer Beschädigung des aufgenommenen Werkstücks führen könnte. Andererseits sollten die Öffnungsbereiche aber auch hinreichend groß sein, so dass Luft durch die Öffnung(en) möglichst hinderungsfrei von der Seite des höheren Drucks (an der Außenseite des Aufnahmeabschnitts) zur Seite des niedrigen Drucks (an der Innenseite des Aufnahmeabschnitts) zu strömen vermag. Die oben angegebenen Durchmesserbereiche haben sich bei von den Erfindern durchgeführten Versuchen als vorteilhaft erwiesen, bei denen an der Kammer der Aufnahme beispielsweise ein Unterdruck in einem Bereich zwischen -60 und -90 kPa angelegt wurde und die längsverschiebbaren Stifte an ihren der Innenseite des Aufnahmeabschnitts zugewandten Enden einen Durchmesser um die 2,5 mm besaßen.

Der Einsatz einer bezüglich der Mittelachse der elastischen Membran zentrierten Öffnung und/oder einer Mehrzahl von Öffnungen, die um die Mittelachse auf wenigstens einem Teilkreis verteilt sind, vorzugsweise gleichmäßig winkelabstandet voneinander, hat sich insbesondere für den Einsatz der Aufnahme zum abgestützten Halten von in einer Draufsicht gesehen runden optischen Werkstücken - wie dies z.B. bei Rohlingen für Brillenlinsen der Fall ist - als zweckmäßig erwiesen. Eine solche Ausgestaltung sorgt vorteilhaft für eine möglichst gleichmäßige Verteilung des Vakuums unter dem gehaltenen Werkstück und ist damit dem Erhalt hoher Haltekräfte förderlich, die das Werkstück auch dann zuverlässig auf bzw. an der Aufnahme zu halten vermögen, wenn z.B. ein Dreh- oder Fräswerkzeug nahe am Werkstückrand mit dem Werkstück in einem spanenden Bearbeitungseingriff steht. Speziell für andere Werkstückgeometrien, z.B. bei in einer Draufsicht gesehen quadratischen oder rechteckigen Werkstücken, können die Öffnungen der Perforation natürlich auch in einer anderen Anordnung und/oder Verteilung im Aufnahmeabschnitt der Membran ausgebildet sein, mit der Zielsetzung einer möglichst gleichmäßigen Flächenverteilung des Vakuums zwischen dem Aufnahmeabschnitt und dem darauf liegenden Werkstück.

Als eine Alternative oder Ergänzung zur geeigneten Anordnung bzw. Platzierung der Öffnung(en) der Perforation im Aufnahmeabschnitt der elastischen Membran kann auch die oben angesprochene kristall- oder wabenförmige Verteilungsstruktur auf der Außenseite des Aufnahmeabschnitts ausgebildet sein, die mit ihren relativ flachen - z.B. zwischen 0,1 und 0,35 mm tiefen - furchenartigen Aussparungen oder Vertiefungen demselben Zweck dient, nämlich für eine an der Außenseite des Aufnahmeabschnitts tunlichst gleichmäßige Vakuumverteilung zu sorgen. Bei einer solchen Ausgestaltung der elastischen Membran kann ggf. auch die Anzahl benötigter Funktionsmembranen reduziert werden, weil nur eine oder wenige Öffnungen den Aufnahmeabschnitt perforieren.

Diese Verteilungsstruktur für das Vakuum kann ferner bevorzugt in einem Durchmesserbereich kleiner gleich 45 mm bezüglich der Mittelachse der elastischen Membran auf der Außenseite des Aufnahmeabschnitts ausgebildet sein, was bei Werkstückdurchmessern größer 50 mm und kleiner 85 mm - wie dies in der Brillenlinsenfertigung häufig der Fall ist - vorteilhaft dafür sorgt, dass bei einem an der Aufnahme zentriert gehaltenen Werkstück keine Falschluft gezogen wird. Letztere würde insbesondere die Haltekräfte in unerwünschter Weise reduzieren. Dasselbe Kriterium gilt vorzugsweise auch für die Öffnung(en) der Perforation im Aufnahmeabschnitt, die ebenfalls in einem Durchmesserbereich kleiner gleich 45 mm bezüglich der Mittelachse der elastischen Membran im Aufnahmeabschnitt ausgebildet sein sollte(n), so dass sie z.B. von einem Rohling für eine Brillenlinse mit üblichen Abmaßen überdeckt werden kann/können. Den jeweiligen Einsatzerfordernissen entsprechend ist es allerdings auch denkbar, einen größeren Durchmesserbereich als 45 mm vorzusehen, innerhalb dessen die Öffnung(en) der Perforation im Aufnahmeabschnitt ausgebildet sind, insbesondere wenn auch größere Werkstücke, beispielsweise Brillenlinsen-Rohlinge mit einem Durchmesser um die 85 mm oder noch größer aufzunehmen sind, die dann an der Aufnahme besser halten. Sollen dann auch kleinere Werkstücke an der Aufnahme aufgenommen werden, kann es durchaus akzeptabel sein, dass eventuell nicht jede Öffnung der Perforation durch das Werkstück am Aufnahmeabschnitt abgedeckt ist, so dass Falschluft gezogen wird, was auch bei der Vakuumerzeugung in gewissen Grenzen Berücksichtigung finden bzw. ausgeregelt werden kann. In solchen Fällen sorgt immerhin die für die jeweilige(n) nicht abgedeckte(n) Öffnung(en) zuständige Funktionsmembran dafür, dass keine Flüssigkeit in die Kammer der Aufnahme eingesaugt wird.

Insbesondere im Hinblick auf eine möglichst hohe Flexibilität und Anpassungsfähigkeit des Aufnahmeabschnitts der elastischen Membran an die zugewandte Werkstückfläche des aufzunehmenden Werkstücks bevorzugt ist es, wenn - für den Fall, dass die wenigstens eine Öffnung der Perforation im Aufnahmeabschnitt eine Mehrzahl von Öffnungen umfasst - jeder Öffnung jeweils eine Funktionsmembran zugeordnet ist. Allerdings können bei einer Mehrzahl von Öffnungen Letztere auch zu mehreren Gruppen zusammengefasst sein, denen in enger räumlicher Nähe jeweils eine Funktionsmembran zugeordnet ist - beispielsweise bei insgesamt 18 Öffnungen der Perforation im Aufnahmeabschnitt 6 Gruppen à 3 Öffnungen mit jeweils einer Funktionsmembran pro Gruppe. Zu gewährleisten ist in solchen Fällen freilich, dass die jeweilige Funktionsmembran flächenmäßig lokal auf die jeweilige Gruppe von Öffnungen begrenzt ist, so dass es nicht zu einer übermäßigen Versteifung des Aufnahmeabschnitts der elastischen Membran durch die verschiedenen Funktionsmembranen kommt.

In einer besonders bevorzugten Ausgestaltung der elastischen Membran kann ferner vorgesehen sein, dass die oder jede Funktionsmembran im Aufnahmeabschnitt der elastischen Membran integriert ist. Gegenüber einer ebenfalls denkbaren Ausgestaltung der elastischen Membran, bei der die oder jede Funktionsmembran z.B. auf der Innenseite des Aufnahmeabschnitts angebracht ist, etwa durch An- bzw. Aufkleben, bietet die obige "integrierte Variante" der elastischen Membran insbesondere den Vorteil, dass beispielsweise unter einer mechanischen Beanspruchung der elastischen Membran beim Abformen oder Abstützen des zu bearbeitenden bzw. bearbeiteten Werkstücks ein Ablösen der Funktionsmembran(en) zuverlässig vermieden werden kann. Hierbei kann die (jeweilige) Funktionsmembran in einer herstellungstechnisch vorteilhaft einfachen Ausgestaltung der elastischen Membran auch die vorerwähnten querschnittsverschiedenen Öffnungsbereiche der wenigstens einen Öffnung der Perforation im Aufnahmeabschnitt trennen.

In einer bevorzugten ersten Alternative der obigen integrierten Variante der elastischen Membran kann diese im Bereich des Aufnahmeabschnitts wenigstens zweiteilig ausgebildet sein, mit einem größeren Hauptteil und wenigstens einem kleineren Membranausschnitt, der in einer zugeordneten, komplementären Aussparung des Hauptteils eingesetzt und mit dem Hauptteil unter Zwischenfügung der oder jeder Funktionsmembran stoffschlüssig oder kraftschlüssig verbunden, vorzugsweise verklebt ist.

Bei dieser ersten Alternative der integrierten Variante der elastischen Membran weisen der Hauptteil und der wenigstens eine Membranausschnitt vorzugsweise zueinander fluchtende Durchgänge auf, die gemeinsam die wenigstens eine Öffnung der Perforation im Aufnahmeabschnitt bilden. Im Vergleich zu einer ebenfalls möglichen Ausgestaltung, bei der anstelle fluchtender Durchgänge im Kontaktbereich zwischen Hauptteil und Membranausschnitt Kanäle oder Nuten ausgebildet sind, um zueinander versetzte Durchgänge gasdurchlässig miteinander zu verbinden, ist das Vorsehen in Flucht liegender Durchgänge an Hauptteil und Membranausschnitt vorteilhaft mit einem geringeren herstellungstechnischen Aufwand verbunden.

Ferner können der Hauptteil und der wenigstens eine Membranausschnitt bei der ersten Alternative der integrierten Variante der elastischen Membran optional zueinander passende Rotationsmarkierungen - z.B. in der Form einer Abflachung an einer ansonsten kreisrunden Geometrie - besitzen, was vorteilhaft den Aufwand reduziert, eine gasdurchlässige Verbindung zwischen den gegenseitigen Durchgängen herzustellen.

Vorzugsweise umfasst besagter Hauptteil auch den vorerwähnten, zur Montage an dem Gehäuse der Aufnahme angepassten Befestigungsabschnitt der elastischen Membran und/oder bildet die Außenseite des Aufnahmeabschnitts der elastischen Membran aus, was gegenüber einer ebenfalls möglichen Ausgestaltung mit auf der Außenseite liegendem Membranausschnitt hinsichtlich der Abdichtung der Kammer im Gehäuse der Aufnahme von Vorteil ist, weil der Hauptteil - bis auf die Öffnung(en) der Perforation - materialeinheitlich geschlossen ist.

In einer bevorzugten Weiterbildung der ersten Alternative der integrierten Variante der elastischen Membran kann ferner in dem wenigstens einen Membranausschnitt mindestens eine Tasche zur Aufnahme der jeweiligen Funktionsmembran ausgebildet sein. Eine solche Ausgestaltung bietet zunächst den Vorteil, dass die im Sandwich aus Hauptteil und Membranausschnitt lokal, nämlich nur im Öffnungsbereich aufgenommene Funktionsmembran im Gesamtverbund dickenmäßig nicht aufträgt. Prinzipiell kann eine solche Tasche zwar auch oder nur im Hauptteil ausgeformt sein, bildet letzter allerdings die Außenseite des Aufnahmeabschnitts der elastischen Membran aus, ist es im Hinblick auf die Vermeidung von unerwünschten "Abbildungen" oder "Abdrücken" der elastischen Membran auf an der Aufnahme aufgenommenen Werkstücken aus im Verhältnis weichen (Kunststoff)Materialien jedoch von Vorteil, wenn der Hauptteil taschenlos eine im Wesentlichen homogene Dicke aufweist.

Hierbei kann die mindestens eine Tasche zur Aufnahme der jeweiligen Funktionsmembran optional von einer Ringnut umgeben sein, die der Aufnahme eines Klebstoffs für die Funktionsmembran dient. Bei einer solchen Ausgestaltung der elastischen Membran kann die Ringnut während der Herstellung der elastischen Membran vorteilhaft den Auftrag des Klebstoffs bzw. dessen Platzierung an der Funktionsmembran vereinfachen und/oder als Hohlraum zur Aufnahme von überschüssigem Klebstoff zwischen den drei Teilen fungieren, wenn der Sandwich aus Hauptteil, in der Tasche angeordneter Funktionsmembran und in der Aussparung des Hauptteils eingesetztem Membranausschnitt bei einem Klebevorgang verpresst wird.

In einer zweiten Alternative der obigen integrierten Variante der elastischen Membran kann die oder jede Funktionsmembran aber auch im Material des Aufnahmeabschnitts der elastischen Membran eingebettet, vorzugsweise einvulkanisiert sein. Diese kostengünstige Fertigungsalternative für große Stückzahlen steht freilich nur dann zur Verfügung, wenn das Material der Funktionsmembran den im Verhältnis hohen Temperaturen innerhalb einer Vulkanisierform zu widerstehen vermag.

In einer weiteren bevorzugten Ausgestaltung der elastischen Membran kann der Befestigungsabschnitt ringförmig, vorzugsweise kreisringförmig ausgebildet und der Aufnahmeabschnitt über einen Falten- oder Rollbalgabschnitt mit dem Befestigungsabschnitt verbunden sein. Ein Vorteil einer solchen Ausgestaltung gegenüber einer ebenfalls denkbaren, insgesamt im Wesentlichen ebenen Ausbildung der elastischen Membran, bei der ein zentraler Aufnahmeabschnitt lediglich von einem ringförmigen Befestigungsabschnitt umgeben ist, besteht insbesondere darin, dass der Aufnahmeabschnitt infolge seiner "Aufhängung" über den Falten- oder Rollbalgabschnitt gut örtlich verschiedene Hübe ausführen kann. Wenn beispielsweise eine Brillenlinse als optisches Werkstück an der Aufnahme für bestimmte Bearbeitungsvorgänge prismatisch verkippt aufgenommen werden soll und dabei mit einem Flächenabschnitt einer Werkstückfläche deutlich tiefer in den Aufnahmeabschnitt der elastischen Membran eintaucht als mit einem diametral gegenüberliegenden Flächenabschnitt derselben Werkstückfläche sorgt der Falten- oder Rollbalgabschnitt vorteilhaft für eine entsprechende Hubmöglichkeit am Aufnahmeabschnitt.

Bei der vorbeschriebenen Ausgestaltung der elastischen Membran mit einem Falten- oder Rollbalgabschnitt kann Letzterer optional radial außerhalb der Innenseite des Aufnahmeabschnitts durch wenigstens ein elastisch verformbares Formteil, insbesondere einen Formring aus einem Schaumstoffmaterial gestützt sein. Hierbei kann es sich grundsätzlich um ein separates Einsatzteil oder einen eingeschäumten Abschnitt an der Membran handeln. So kann auf besonders einfache Weise ein Einfallen der elastischen Membran unter der Einwirkung des Vakuums in der Kammer am Gehäuse vermieden werden, ohne dass hierfür die elastische Membran in Teilbereichen mit größeren Wandstärken versehen und/oder mit einer geeigneten Armierung ausgesteift werden müsste, was im Hinblick auf eine möglichst gute Anpassungsfähigkeit der elastischen Membran an das zu haltende Werkstück kontraproduktiv wäre.

In den von den Erfindern durchgeführten Versuchen hat es sich ferner speziell hinsichtlich wiederum einer möglichst guten Anpassungsfähigkeit der elastischen Membran an das aufzunehmende Werkstück sowie eine gute Beständigkeit gegen die im jeweiligen Herstellungsschritt ggf. verwendeten, flüssigen Hilfsstoffe bzw. Chemikalien als besonders vorteilhaft erwiesen, wenn die elastische Membran aus NBR oder EPDM besteht und/oder eine Härte nach SHORE A zwischen 30 und 80, vorzugsweise zwischen 40 und 60 besitzt und/oder im Bereich des Aufnahmeabschnitts eine Materialstärke zwischen 1,0 mm und 4,0 mm, vorzugsweise zwischen 1,3 mm und 3,0 mm aufweist. Was schließlich die Funktionsmembran angeht, hat es sich zum einen hinsichtlich einer guten Verfügbarkeit am Markt und zum anderen zur Erzielung der gewünschten Funktionalitäten in den Versuchen als vorteilhaft herausgestellt, wenn die Funktionsmembran aus einem PTFE-Gewebe besteht und/oder mit einer hydrophoben und/oder oleophoben Beschichtung versehen ist und/oder einen Eindringwiderstand gegen Wasser größer gleich 0,7 bar, vorzugsweise größer gleich 0,8 bar, bestimmt nach ASTM D751, aufweist, und/oder einen Luftdurchsatz bei einer Druckdifferenz von 70 mbar (1,0 psi) zwischen 10 und 100 L / (h x cm²), vorzugsweise zwischen 20 und 60 L / (h x cm²), bestimmt nach ASTM D737, hat.

Weitere Merkmale, Eigenschaften und Vorteile der erfindungsgemäßen elastischen Membran und der diese einsetzenden Aufnahme ergeben sich für den Fachmann aus der nachfolgenden Beschreibung bevorzugter Ausführungsbeispiele.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, wobei gleiche bzw. entsprechende Teile mit denselben Bezugszeichen versehen sind. In den Zeichnungen zeigen:

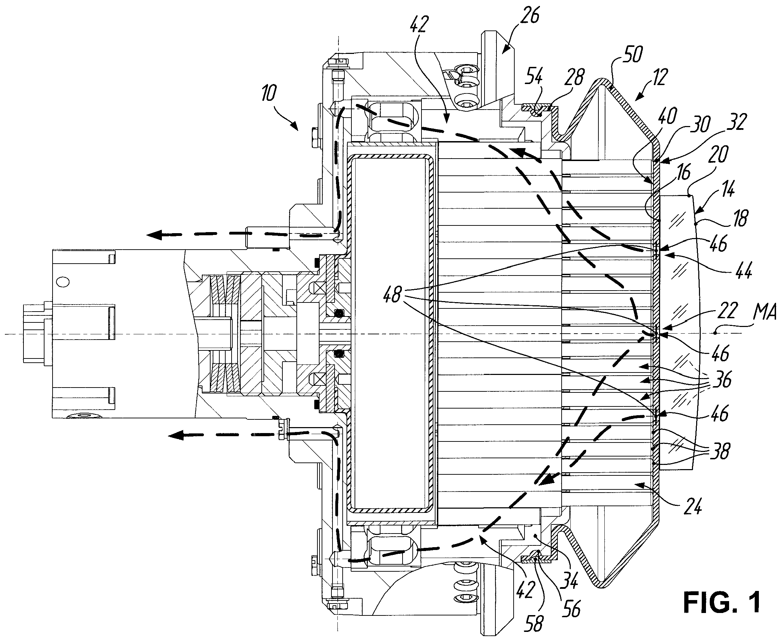

- Fig. 1: eine Teillängsschnittansicht einer erfindungsgemäßen Aufnahme für die Bearbeitung von optischen Werkstücken, an der eine hier vereinfacht dargestellte, erfindungsgemäße elastische Membran lösbar montiert ist, wobei der Schnittverlauf so gewählt ist, dass eine mit gestrichelter Linie markierte, pneumatische Verbindung zum Evakuieren einer eine Abstützanordnung der Aufnahme aufnehmenden Kammer ersichtlich ist, welche von der elastischen Membran mit einer Perforation als Bestandteil einer Halteanordnung der Aufnahme begrenzt ist, über die das Kammervakuum zum Halten eines zu bearbeitenden Werkstücks wie angedeutet außen an der elastischen Membran ansteht;
- Fig. 2: eine Seitenansicht einer elastischen Membran nach einem ersten Ausführungsbeispiel der Erfindung, in einem von einer zugehörigen Aufnahme nach z.B. der Fig. 1 getrennten Zustand;
- Fig. 3: eine Draufsicht auf die elastische Membran gemäß Fig. 2 von rechts in Fig. 2, mit Blick auf eine Außenseite eines zentralen Aufnahmeabschnitts zur flächigen Auflage des zu bearbeitenden Werkstücks, in dem die vorerwähnte Perforation mit einer Mehrzahl von Öffnungen ausgebildet ist, welche die Außenseite mit einer Innenseite der elastischen Membran verbinden;
- Fig. 4: eine Untersicht auf die elastische Membran gemäß Fig. 2 von links in Fig. 2, mit Blick auf die Innenseite des Aufnahmeabschnitts zur Anlage der in der Kammer der Aufnahme gemäß Fig. 1 aufgenommenen Abstützanordnung;
- Fig. 5: eine Schnittansicht der elastischen Membran gemäß Fig. 2 entsprechend der Schnittverlaufslinie V-V in Fig. 4, wobei mit gestrichelten Linien und einer gestrichelten Kreuzschraffur ein optionaler Formring aus einem Schaumstoffmaterial angedeutet ist, der zur elastischen Stützung eines den Aufnahmeabschnitt mit einem ringförmigen Befestigungsabschnitt verbindenden Faltenbalgabschnitts der elastischen Membran dient;
- Fig. 6: eine Vergrößerung des Details VI in Fig. 5, die illustriert, wie eine hier mit einem dicken schwarzen Strich angedeutete, semipermeable Funktionsmembran lokal im Bereich einer Öffnung der Perforation im Aufnahmeabschnitt der elastischen Membran gemäß Fig. 2 integriert ist, und zwar zwischen einem größeren Hauptteil der Membran und einem damit verklebten, kleineren Membranausschnitt;
- Fig. 7: eine Untersicht auf das hier einzeln gezeigte Hauptteil der elastischen Membran gemäß Fig. 2, mit Blick auf eine zum Membranausschnitt komplementäre Aussparung zur Aufnahme des Membranausschnitts;
- Fig. 8: eine Draufsicht auf den ebenfalls einzeln gezeigten Membranausschnitt der elastischen Membran gemäß Fig. 2, mit Blick auf eine Mehrzahl von Taschen zur Aufnahme jeweils einer Funktionsmembran;
- Fig. 9: eine perspektivische Explosionsdarstellung der elastischen Membran gemäß Fig. 2 mit - von links nach rechts in Fig. 9 gesehen - dem Hauptteil, den einzelnen Funktionsmembranen und dem Membranausschnitt vor ihrer Verklebung;
- Fig. 10: eine Untersicht auf eine elastische Membran nach einem zweiten Ausführungsbeispiel der Erfindung, wiederum in einem von einer zugehörigen Aufnahme nach beispielsweise der Fig. 1 separierten Zustand;
- Fig. 11: eine Schnittansicht der elastischen Membran gemäß Fig. 10 entsprechend der Schnittverlaufslinie XI-XI in Fig. 10;
- Fig. 12: eine Vergrößerung des Details XII in Fig. 11, die veranschaulicht, wie erneut eine semipermeable Funktionsmembran lokal im Bereich einer Öffnung der Perforation im Aufnahmeabschnitt der elastischen Membran gemäß Fig. 10 integriert ist, und zwar durch Einbettung im Material des Aufnahmeabschnitts;
- Fig. 13: eine perspektivische Ansicht eines Einsatzes für ein Unterteil einer Vulkanisierform zur Herstellung der elastischen Membran gemäß Fig. 10, in dem entsprechend der Anzahl an Funktionsmembranen der elastischen Membran Aufnahmestücke für jeweils eine Funktionsmembran montiert sind, an denen die Funktionsmembranen beim Vulkanisierprozess gehalten werden;
- Fig. 14: eine perspektivische Ansicht eines Aufnahmestücks des in Fig. 13 gezeigten Einsatzes für das Unterteil der Vulkanisierform;
- Fig. 15: eine Draufsicht auf eine elastische Membran nach einem dritten Ausführungsbeispiel der Erfindung, erneut in einem von einer zugehörigen Aufnahme nach z.B. der Fig. 1 getrennten Zustand, mit Blick auf den Aufnahmeabschnitt der Membran, dessen Perforation nur wenige Öffnungen umfasst, die auf der Außenseite des Aufnahmeabschnitts in einer in der Draufsicht gesehen kristallförmigen Verteilungsstruktur aus flachen, furchenartigen Vertiefungen für das Vakuum münden; und
- Fig. 16: eine Draufsicht auf eine elastische Membran nach einem vierten Ausführungsbeispiel der Erfindung, wiederum in einem von einer zugehörigen Aufnahme nach etwa der Fig. 1 separierten Zustand, mit Blick auf den Aufnahmeabschnitt der Membran, dessen Perforation lediglich eine zentrale Öffnung umfasst, die auf der Außenseite des Aufnahmeabschnitts in einer in der Draufsicht gesehen wabenförmigen Verteilungsstruktur aus flachen, furchenartigen Vertiefungen für das Vakuum mündet.

### DETAILLIERTE BESCHREIBUNG DES AUSFÜHRUNGSBEISPIELS

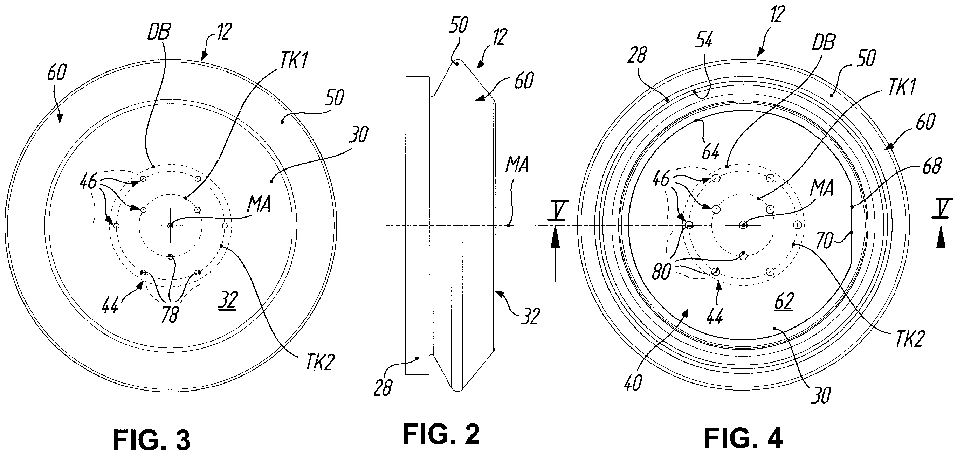

In Fig. 1 ist eine Aufnahme für die Bearbeitung von optischen Werkstücken allgemein mit dem Bezugszeichen 10 beziffert. Diese Aufnahme 10 ist Gegenstand der zeitgleich unter dem Titel "Aufnahme für die Bearbeitung von optischen Werkstücken, insbesondere Brillenlinsen" eingereichten deutschen Patentanmeldung DE 10 2023 110 130.7 derselben Anmelderin, wie eingangs schon erwähnt. An dieser Aufnahme 10 - oder der in der oben ebenfalls bereits angeführten älteren deutschen Patentanmeldung DE 10 2021 005 202.1 (DE 10 2021 005 202 A1) derselben Anmelderin offenbarten Aufnahme - kann eine in Fig. 1 nur prinzipiell gezeigte, nachfolgend anhand der Fig. 2 bis 16 mit vier Ausführungsbeispielen aber noch ausführlicher beschriebene elastische Membran 12 zum Einsatz kommen, insbesondere um daran Brillenlinsen aus Kunststoff zu bearbeiten, wie es in der anfänglich auch schon zitierten Druckschrift DE 10 2021 004 831 A1 beschrieben ist. Auf diese Unterlagen (DE 10 2023 110 130.7, DE 10 2021 005 202 A1, DE 10 2021 004 831 A1) wird an dieser Stelle bezüglich der strukturellen Details der Aufnahme sowie den Einsatz- und Verfahrensdetails nochmals ausdrücklich Bezug genommen. Im Folgenden soll die Aufnahme 10 daher auch nur insoweit beschrieben werden, als es für das Verständnis der vorliegenden Erfindung erforderlich erscheint.

Eine Brillenlinse 14 als Beispiel für ein zu bearbeitendes optisches Werkstück ist in Fig. 1 gezeigt. Die Brillenlinse 14 hat zwei - jedenfalls am Ende der Bearbeitung optisch wirksame - Werkstückflächen 16, 18 und einen Werkstückrand 20 dazwischen. Es handelt sich in den verschiedenen Bearbeitungszuständen, d.h. ausgehend vom Brillenlinsenrohling über das teilbearbeitete Brillenlinsenhalbzeug bis hin zur fertigbearbeiteten Brillenlinse, stets um ein flächiges Werkstück. Als solches muss die Brillenlinse 14 bei der Bearbeitung zuverlässig gehalten und zugleich gegen unerwünschte Verformungen abgestützt werden, wozu hier die Aufnahme 10 dient.

Kurzgefasst umfasst die Aufnahme 10 für die vorerwähnten Funktionen "Halten" und "Abstützen" einer zu bearbeitenden Brillenlinse 14 allgemein eine Halteanordnung 22 sowie eine Abstützanordnung 24 in bzw. an einem mehrteiligen Gehäuse 26, an dem die elastische Membran 12 über einen entsprechend angepassten Befestigungsabschnitt 28 montiert ist. Die elastische Membran 12 besitzt dabei einen mit dem Befestigungsabschnitt 28 verbundenen Aufnahmeabschnitt 30, auf dessen Außenseite 32 die Brillenlinse 14 gemäß Fig. 1 mit einer (16) ihrer Werkstückflächen 16, 18 flächig aufgelegt werden kann.

Die elastische Membran 12 begrenzt ferner zusammen mit dem Gehäuse 26 eine Kammer 34, in der eine Vielzahl von mindestens zum Großteil separat längsverschiebbaren Stiften 36 der Abstützanordnung 24 der Aufnahme 10 aufgenommen ist. Die Stifte 36 können jeweils mit einem Stiftende 38 an einer Innenseite 40 des Aufnahmeabschnitts 30 der elastischen Membran 12 zur Anlage gebracht werden, wofür die Innenseite 40 angepasst, d.h. insbesondere geeignet dimensioniert ist. Darüber hinaus können die Stifte 36 wahlweise gegen eine Längsverschiebung bezüglich des Gehäuses 26, d.h. eine Verschiebung parallel zu einer Mittelachse MA von Aufnahme 10 und elastischer Membran 12 durch einen im dargestellten Ausführungsbeispiel quer wirkenden Klemmmechanismus 42 festgelegt werden. Dann dienen die Stifte 36 mit ihren Stiftenden 38 dazu, die mit einer (16) ihrer Werkstückflächen 16, 18 über die Halteanordnung 22 an der Aufnahme 10 gehaltene Brillenlinse 14 an der den Stiftenden 38 zugewandten Werkstückfläche 16 nach Maßgabe deren Geometrie flächig und fest abzustützen.

Was des Weiteren die Halteanordnung 22 der Aufnahme 10 angeht, besitzt der Aufnahmeabschnitt 30 der elastischen Membran 12 als Bestandteil der Halteanordnung 22 eine Perforation 44 mit wenigstens einer die Innenseite 40 mit der Außenseite 32 verbindenden Öffnung 46 - im Schnitt gemäß Fig. 1 sind drei solcher Öffnungen 46 der Perforation 44 zu sehen - über die ein an der Kammer 34 angelegtes Vakuum (in Fig. 1 durch gestrichelte Pfeile angedeutet) auf die Außenseite 32 geführt werden kann. Im Ergebnis steht ein Vakuum in der Kammer 34 über diese Perforation 44 auf der Außenseite 32 des Aufnahmeabschnitts 30 der elastischen Membran 12 zum Halten der Brillenlinse 14 an.

Eine Besonderheit der elastischen Membran 12 besteht dabei darin, dass der wenigstens einen Öffnung 46 im Aufnahmeabschnitt 30 eine in Fig. 1 nur schematisch mit einem schwarzen Strich dargestellte, semipermeable Funktionsmembran 48 zugeordnet ist, welche sich lediglich lokal, in einem unmittelbar an der Öffnung 46 angrenzenden Bereich erstreckt. So ist im Ausführungsbeispiel gemäß Fig. 1, bei dem die Perforation 44 im Aufnahmeabschnitt 30 der elastischen Membran 12 eine Mehrzahl von Öffnungen 46 umfasst, jeder Öffnung 46 jeweils eine Funktionsmembran 48 zugeordnet. "Semipermeabel" bedeutet hierbei, dass die (jeweilige) Funktionsmembran 48 für Gas durchlässig ist, einem Flüssigkeitsdurchtritt durch die wenigstens eine Öffnung 46 indes entgegenwirkt. Die Funktionsmembran(en) 48 bildet/bilden also - wie eingangs schon geschildert - einen Schutzmechanismus, der verhindert, dass insbesondere die Abstützanordnung 24 der Aufnahme 10 mit ihren Stiften 36 durch über die vakuumierte Kammer 34 im Gehäuse 26 ggf. angesaugte, flüssige (Bearbeitungs)Hilfsmittel Schaden nimmt. Da die Funktionsmembran(en) 48 in bzw. am Aufnahmeabschnitt 30 der elastischen Membran 12 nur sehr "lokal" vorhanden ist/sind, versteift/versteifen sie den Aufnahmeabschnitt 30 der elastischen Membran 12 nicht, der folglich eine über der Fläche gesehen im Wesentlichen konstante, hohe Flexibilität aufweist, so dass eine formgetreue Anpassung der Außenseite 32 des Aufnahmeabschnitts 30 an die zugewandte Werkstückfläche 16 der an der Aufnahme 10 gehaltenen Brillenlinse 14 gut gelingt.

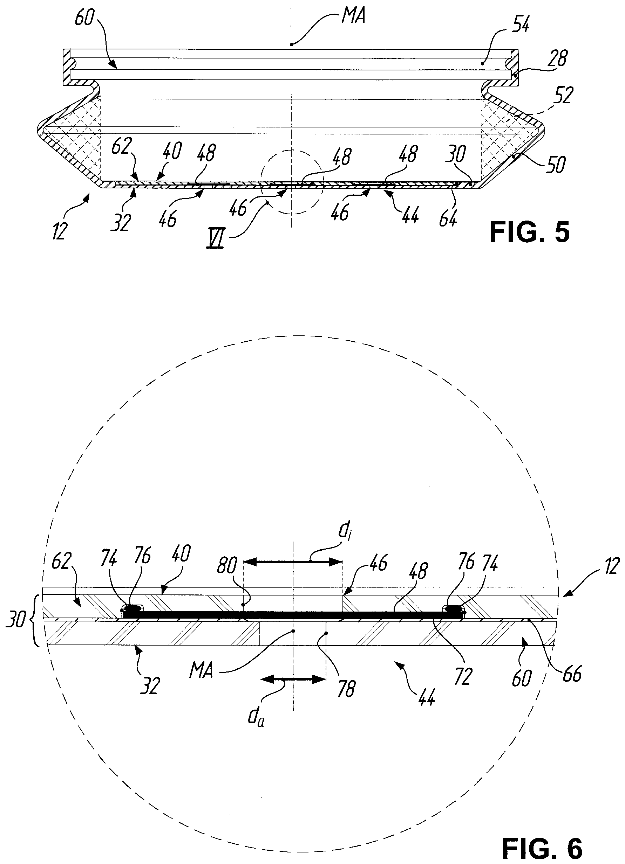

Gemäß Fig. 1 weist die elastische Membran 12 ferner einen sich radial außen an dem Aufnahmeabschnitt 30 anschließenden Balgabschnitt, hier in der Form eines Faltenbalgabschnitts 50 auf, der wiederum in den im dargestellten Ausführungsbeispiel kreisringförmigen Befestigungsabschnitt 28 der elastischen Membran 12 übergeht. Über den Faltenbalgabschnitt 50 sind der Befestigungsabschnitt 28 und der Aufnahmeabschnitt 30 der elastischen Membran 12 also flexibel verbunden. Ggf. kann der Faltenbalgabschnitt 50 radial außerhalb der Innenseite 40 des Aufnahmeabschnitts 30, also in einem Bereich, der im montierten Zustand der elastischen Membran 12 radial außerhalb der Stifte 36 der Abstützanordnung 24 der Aufnahme 10 liegt, durch wenigstens ein elastisch verformbares Formteil, insbesondere einen Formring 52 aus einem Schaumstoffmaterial gestützt sein. Eine solche Maßnahme an der elastischen Membran 12, die eine ungewollte Verformung der elastischen Membran 12 insbesondere im Bereich des Faltenbalgabschnitts 50 beim Anlegen von Vakuum an der Kammer 34 verhindert, ist in Fig. 5 mit gestrichelten Linien angedeutet.

Am Innenumfang des Befestigungsabschnitts 28 besitzt die elastische Membran 12 des Weiteren einen umlaufenden Wulst 54, der in einer zugeordneten Radialnut 56 im Gehäuse 26 der Aufnahme 10 eingeknüpft ist. Dabei hält eine am Außenumfang des Befestigungsabschnitts 28 angebrachte Spannschelle 58 den Befestigungsabschnitt 28 in einem formschlüssigen Eingriff mit der Radialnut 56 des Gehäuses 26. Diese Verbindung der elastischen Membran 12 mit dem Gehäuse 26 der Aufnahme 10 ist gasdicht und lösbar, so dass die elastische Membran 12 als Verschleißteil der Aufnahme 10 leicht demontiert und ausgetauscht werden kann.

Bevorzugte Ausführungsbeispiele für die elastische Membran 12 sind nun in den Fig. 2 bis 9 (erstes Ausführungsbeispiel), 10 bis 12 (zweites Ausführungsbeispiel) sowie 15 und 16 (drittes bzw. viertes Ausführungsbeispiel) gezeigt. Allen Ausführungsbeispielen ist zunächst gemein, dass die bzw. jede Funktionsmembran 48 im Aufnahmeabschnitt 30 der elastischen Membran 12 integriert ist, d.h. nicht auf der Innenseite 40 oder der Außenseite 32 des Aufnahmeabschnitts 30 liegt oder dort befestigt ist. Wie eine solche "verliersichere" Integration der Funktionsmembran(en) 48 im Aufnahmeabschnitt 30 konkret realisiert werden kann, soll nachfolgend anhand der ersten beiden Ausführungsbeispiele erläutert werden, die hierfür verschiedene Konzepte aufzeigen.

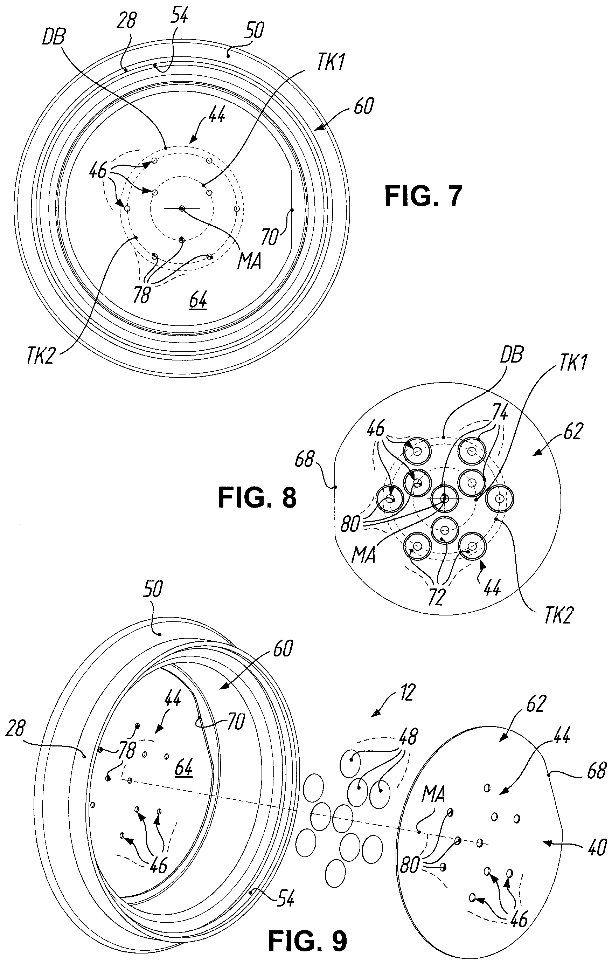

Bei dem ersten Ausführungsbeispiel ist die elastische Membran 12 im Bereich des Aufnahmeabschnitts 30 (wenigstens) zweiteilig ausgebildet, was am besten in der Explosionsdarstellung gemäß Fig. 9 zu sehen ist. Genauer gesagt umfasst die elastische Membran 12 einen größeren Hauptteil 60 und (wenigstens) einen demgegenüber kleineren Membranausschnitt 62. Letzterer ist in einer zugeordneten, komplementären Aussparung 64 des Hauptteils 60 eingesetzt und mit dem Hauptteil 60 unter Zwischenfügung der oder jeder Funktionsmembran 48 stoffschlüssig oder kraftschlüssig verbunden, vorzugsweise verklebt. Eine entsprechende Klebstoffschicht ist in der Vergrößerung gemäß Fig. 6 mit dem Bezugszeichen 66 versehen. Dabei weisen der Hauptteil 60 und der Membranausschnitt 62 zueinander fluchtende Durchgänge auf, die gemeinsam die Öffnungen 46 der Perforation 44 im Aufnahmeabschnitt 30 der elastischen Membran 12 bilden.

Wie am besten in den Einzelteildarstellungen gemäß den Fig. 7 bis 9 zu erkennen ist, besitzen der Hauptteil 60 und der Membranausschnitt 62 zueinander passende Rotationsmarkierungen 68, 70 - hier in der Form gerader Randabschnitte an einem ansonsten kreisrunden Rand des Membranausschnitts 62 bzw. der Aussparung 64 im Hauptteil 60 - was das Ausfluchten der Durchgänge in Hauptteil 60 und Membranausschnitt 62 vereinfacht. Die Einzelteildarstellungen in den Fig. 7 und 9 zeigen ebenfalls, dass im hier dargestellten Ausführungsbeispiel der Hauptteil 60 auch den Befestigungsabschnitt 28 der elastischen Membran 12 umfasst. Außerdem bildet der Hauptteil 60 in diesem Ausführungsbeispiel die Außenseite 32 des Aufnahmeabschnitts 30 der elastischen Membran 12.

Wie ferner die Fig. 6 und 8 zeigen, sind in dem Membranausschnitt 62 entsprechend der Anzahl von Funktionsmembranen 48 (eine bzw.) mehrere Taschen 72 zur engen Aufnahme der jeweiligen - im Ausführungsbeispiel kreisrunden - Funktionsmembran 48 ausgebildet. Die bzw. jede Tasche 72 zur Aufnahme der jeweiligen Funktionsmembran 48 ist gemäß den Fig. 6 und 8 von einer Ringnut 74 umgeben, die der Aufnahme eines Klebstoffs 76 (siehe Fig. 6) für die Funktionsmembran 48 dient.

Wie des Weiteren am besten in Fig. 6 zu sehen ist, weist die bzw. jede Öffnung 46 der Perforation 44 im Aufnahmeabschnitt 30 der elastischen Membran 12 in Längsrichtung gesehen querschnittsverschiedene Öffnungsbereiche 78, 80 auf, wobei der Querschnitt des jeweiligen Öffnungsbereichs 78 auf der Außenseite 32 des Aufnahmeabschnitts 30 kleiner ist als auf der Innenseite 40 des Aufnahmeabschnitts 30. So kann gemäß den dargestellten Ausführungsbeispielen die (wenigstens eine) Öffnung 46 der Perforation 44 auf der Außenseite 32 des Aufnahmeabschnitts 30 einen im Wesentlichen runden Öffnungsbereich 78 besitzen, mit z.B. einem Durchmesser dₐ größer gleich 0,5 mm und kleiner gleich 3,0 mm. Auf der Innenseite 40 des Aufnahmeabschnitts 30 hingegen kann die (wenigstens eine) Öffnung 46 der Perforation 44 einen Öffnungsbereich 80 besitzen, der ebenfalls im Wesentlichen rund ist, mit beispielsweise einem Durchmesser dᵢ größer gleich 1,5 mm und kleiner gleich 4,0 mm. In konkreter Ausgestaltung kann die jeweilige Öffnung 46 also innen z.B. einen Durchmesser von 3 mm und außen einen Durchmesser von 2 mm aufweisen.

Was die Anzahl und Verteilung der Öffnungen 46 der Perforation 44 im Aufnahmeabschnitt 30 der elastischen Membran 12 angeht, kann die Perforation 44 im Aufnahmeabschnitt 30 eine bezüglich der Mittelachse MA der elastischen Membran 12 zentrale Öffnung 46 und/oder zwischen 3 und 18 Öffnungen 46 umfassen, die um die Mittelachse MA der elastischen Membran 12 vorzugsweise gleichmäßig winkelabstandet voneinander auf wenigstens einem Teilkreis TK1, TK2 verteilt sind. Konkret gezeigt sind in den Fig. 3 und 4 bzw. 7 und 8 für das erste Ausführungsbeispiel eine zentrale Öffnung 46, drei Öffnungen 46 auf dem inneren Teilkreis TK1 und sechs Öffnungen 46 auf dem äußeren Teilkreis TK2.

Die Öffnungen 46 der Perforation 44 sind hierbei bevorzugt in einem Durchmesserbereich DB kleiner gleich 45 mm bezüglich der Mittelachse MA der elastischen Membran 12 im Aufnahmeabschnitt 30 ausgebildet, so dass sie von einem Rohling für eine Brillenlinse 14 mit üblichen Abmaßen überdeckt werden können. Grundsätzlich gilt dabei, dass zwischen der Anzahl an Öffnungen 46 der Perforation 44 im Aufnahmeabschnitt 30 und dem Querschnitt der jeweiligen Öffnung 46 eine Abhängigkeit dergestalt besteht, dass bei mehr Öffnungen 46 der jeweilige lichte Öffnungsquerschnitt kleiner und bei weniger Öffnungen 46 der jeweilige lichte Öffnungsquerschnitt größer sein sollte.

Wie sich insbesondere aus der Fig. 6 ergibt, trennt die jeweilige Funktionsmembran 48 die querschnittsverschiedenen Öffnungsbereiche 78, 80 der entsprechenden Öffnung 46. Die Funktionsmembran 48 liegt dabei in Längsrichtung der jeweiligen Öffnung 46 gesehen im Wesentlichen mittig im Material des Aufnahmeabschnitts 30 der elastischen Membran 12.

Zur Herstellung der elastischen Membran 12 nach dem ersten Ausführungsbeispiel gemäß den Fig. 2 bis 9 wird beispielsweise wie folgt vorgegangen:
Zunächst werden der größere Hauptteil 60 und der kleinere Membranausschnitt 62 aus demselben Ausgangsmaterial geformt und vulkanisiert, wobei die Formgebung hierbei z.B. durch Pressen, Spritzpressen oder Spritzgießen unter Druck und Temperatur bei gleichzeitiger Vulkanisation erfolgt. Das Material für die Funktionsmembran(en) 48 ist üblicherweise als Rollenware verfügbar und kann beispielsweise durch Ausschneiden oder Ausstanzen entsprechend der Form und Größe der Taschen 72 im Membranausschnitt 62 konfektioniert werden.

Nach der Bereitstellung der einzelnen Bestandteile der elastischen Membran 12 werden der Hauptteil 60 sowie der Membranausschnitt 62 im Bereich der späteren Kontakt- bzw. Klebeflächen gereinigt und entfettet bevor ein Kontaktkleber (spätere Klebstoffschicht 66) zum Fügen der Kontaktflächen gleichmäßig auf diesen aufgebracht wird. Wichtig bei der Auswahl eines geeigneten Kontaktklebers ist, dass nach dem Erhärten des Kontaktklebers die entstandene Klebstoffschicht 66 noch möglichst flexibel ist.

Der Kontaktkleber muss sodann ablüften. Während dessen wird am Membranausschnitt 62 in die die Taschen 72 zur Aufnahme der jeweiligen Funktionsmembranen 48 umgebenden Ringnuten 74 der Klebstoff 76 eingebracht. Die Funktionsmembranen 48 werden sodann in den Taschen 72 platziert und mittels des Klebstoffs 76 im Bereich der Ringnuten 74 fixiert.

Nach dem Ablüften müssen die Kontaktflächen an Hauptteil 60 und Membranausschnitt 62 zum Verkleben unter Aufbringung einer geeigneten Kontaktkraft gefügt werden. Hierzu werden der Hauptteil 60 und der mit den Funktionsmembranen 48 bestückte Membranausschnitt 62 in gegenüberliegenden Einsätzen einer Presse so positioniert, dass die entlang der Mittelachse MA gesehen gegenüberliegenden Kontaktflächen über die Rotationsmarkierungen 68, 70 an Hauptteil 60 bzw. Membranausschnitt 62 zueinander passend ausgerichtet sind. In dieser Ausrichtung fluchten die im Hauptteil 60 und dem Membranausschnitt 62 ausgebildeten Durchgänge zueinander, so dass diese nach dem anschließenden Verpressen gemeinsam die Öffnungen 46 der Perforation 44 im Aufnahmeabschnitt 30 der elastischen Membran 12 bilden.

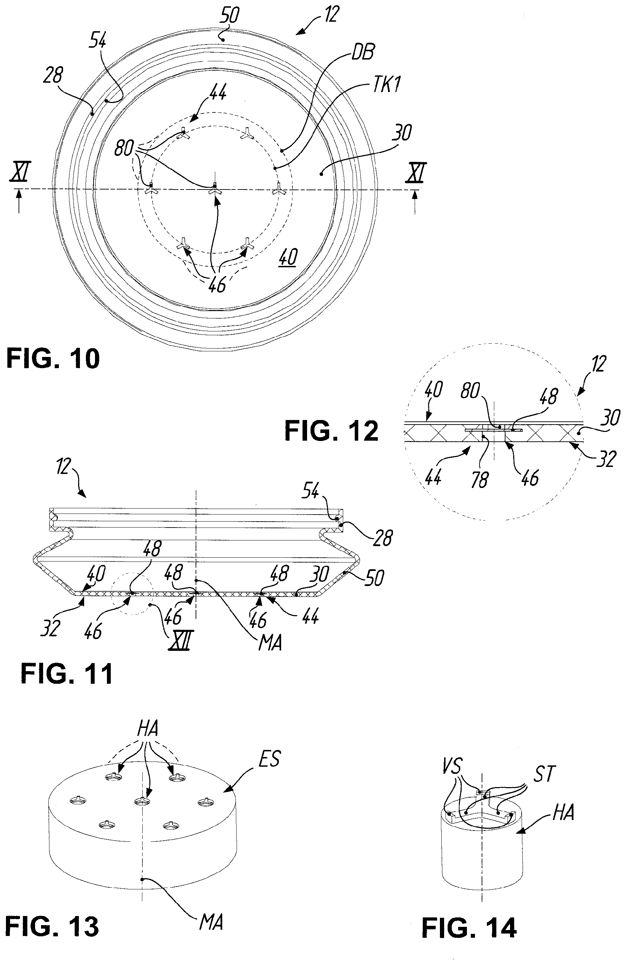

Bei dem in den Fig. 10 bis 14 gezeigten zweiten Ausführungsbeispiel liegt die jeweilige Funktionsmembran 48 nicht eingefügt zwischen einzelnen Teilen im Aufnahmeabschnitt 30 der elastischen Membran 12, um die jeweilige Öffnung 46 mit der bereits angesprochenen, semipermeablen Schutzfunktion auszustatten, sondern ist im Material des Aufnahmeabschnitts 30 der elastischen Membran 12 eingebettet. Dies kann beispielsweise durch Einvulkanisieren der Funktionsmembran 48 geschehen.

Außerdem unterscheidet sich die elastische Membran 12 nach dem zweiten Ausführungsbeispiel von der elastischen Membran 12 nach dem ersten Ausführungsbeispiel dadurch, dass der innenseitige Öffnungsbereich 80 der jeweiligen Öffnung 46 der Perforation 44 im Aufnahmeabschnitt 30 (vgl. Fig. 12) einen sternförmigen Querschnitt besitzt, wie am besten in Fig. 10 zu sehen ist, während der Öffnungsbereich 78 der jeweiligen Öffnung 46 auf der Außenseite 32 des Aufnahmeabschnitts 30 einen runden Querschnitt aufweist, wie oben zum ersten Ausführungsbeispiel schon beschrieben. Dabei ist die Querschnittsfläche der jeweiligen Öffnung 46 auf der Außenseite 32 (runder Querschnitt) des Aufnahmeabschnitts 30 der elastischen Membran 12 aber wiederum kleiner als die Querschnittsfläche der entsprechenden Öffnung 46 auf der Innenseite 40 (sternförmiger Querschnitt) des Aufnahmeabschnitts 30.

Zur Herstellung der elastischen Membran 12 nach dem zweiten Ausführungsbeispiel gemäß den Fig. 10 bis 14 wird z.B. wie folgt vorgegangen:
Die Formgebung der elastischen Membran 12 erfolgt hier durch Spritzpressen oder Spritzgießen unter Druck und Temperatur bei gleichzeitiger Vulkanisation in einer hier nicht weiter dargestellten Vulkanisierform mit einem Unterteil und einem Oberteil.

In dem Unterteil der Vulkanisierform ist ein in Fig. 13 dargestellter Einsatz ES mit Bohrungen zur Festlegung von zylindrischen Haltern HA (siehe Fig. 14) für die Funktionsmembranen 48 vorgesehen. Jeder Halter HA weist auf seiner dem Oberteil der Vulkanisierform zugewandten Stirnseite sternförmig angeordnete Stege ST zum Auflegen einer Funktionsmembran 48 auf, die an ihren radial äußeren Enden mit Vorsprüngen VS versehen sind, gegen die die Ränder der runden Funktionsmembranen 48 formschlüssig zur Anlage bringbar sind.

Das Oberteil der Vulkanisierform hat zu den Haltern HA im Einsatz ES komplementär angeordnete, zylinderförmige Gegenhalter (nicht gezeigt), die im zusammengefügten Zustand der Vulkanisierform in Richtung des Unterteils überstehen und zentral auf den von den Stegen ST abgewandten Seiten der auf den Haltern HA aufgelegten Funktionsmembranen 48 haltend anliegen. Bei der anschließenden Befüllung der Vulkanisierform werden die nicht von den Stegen ST und den zylinderförmigen Gegenhaltern bedeckten/abgeschirmten Bereiche der Funktionsmembranen 48 von dem zu vulkanisierenden Material umschlossen.

Infolgedessen verbleiben nach der auf das Vulkanisieren folgenden Entformung der elastischen Membran 12 auf der Innenseite 40 bzw. auf der Außenseite 32 des Aufnahmeabschnitts 30 die querschnittsverschiedenen, durch die Funktionsmembranen 48 getrennten Öffnungsbereiche 78, 80. Diese weisen auf der Außenseite 32 des Aufnahmeabschnitts 30 den zylinderförmigen Gegenhaltern am Oberteil der Vulkanisierform entsprechende runde Querschnitte bzw. auf der Innenseite 40 des Aufnahmeabschnitts 30 den sternförmig angeordneten Stegen ST an den Haltern HA im Unterteil der Vulkanisierform entsprechende sternförmige Querschnitte auf, über die die Luft von außen durch die Funktionsmembranen 48 hindurch abgesaugt werden kann.

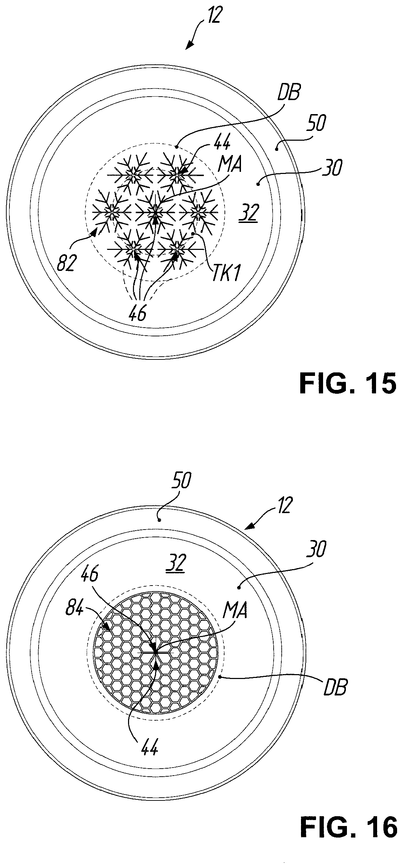

Bei den weiteren Ausführungsbeispielen gemäß den Fig. 15 und 16 umfasst die Perforation 44 im Aufnahmeabschnitt 30 der elastischen Membran 12 entweder nur eine - beim vierten Ausführungsbeispiel nach Fig. 16 bezüglich der Mittelachse MA zentrale - Öffnung 46 oder einige wenige Öffnungen 46 - beim dritten Ausführungsbeispiel gemäß Fig. 15 eine zentrale Öffnung 46 sowie 6 weitere Öffnungen 46, die auf einem Teilkreis TK1 bezüglich der Mittelachse MA gleichmäßig winkelbeabstandet voneinander angeordnet sind.

Beim dritten Ausführungsbeispiel münden die insgesamt 7 Öffnungen 46 in einer Verteilungsstruktur 82 für das Vakuum, die, wie in Fig. 15 gezeigt, in der Draufsicht gesehen kristallförmig ausgebildet ist. Beim vierten Ausführungsbeispiel gemäß Fig. 16 hingegen mündet die eine zentrale Öffnung 46 in einer in der Draufsicht gesehen wabenförmigen Verteilungsstruktur 84 für das Vakuum.

Beide Verteilungsstrukturen 82, 84 sind auf der Außenseite 32 des Aufnahmeabschnitts 30 der elastischen Membran 12 ausgebildet und bestehen aus flachen, furchenartigen Vertiefungen, um das Vakuum unter einer aufgelegten Brillenlinse 14 zu verteilen. Mit anderen Worten gesagt "sammeln" diese Verteilungsstrukturen 82, 84 die unter einer auf die Aufnahme 10 aufgelegten Brillenlinse 14 befindliche Luft und führen sie über die Öffnung(en) 46 der Perforation 44 im Aufnahmeabschnitt 30 der elastischen Membran 12 ab, so dass das Vakuum unter der Brillenlinse 14 zum Halten ansteht.

Dabei sind beide Verteilungsstrukturen 82, 84 für das Vakuum in einem Durchmesserbereich DB kleiner gleich 45 mm bezüglich der Mittelachse MA der elastischen Membran 12 auf der Außenseite 32 des Aufnahmeabschnitts 30 ausgebildet, so dass sie von einem Rohling für eine Brillenlinse 14 mit üblichen Abmaßen überdeckt werden können. Derartige Verteilungsstrukturen können schon beim Formen der elastischen Membran 12 durch entsprechende Positivstrukturen in der Vulkanisierform erzeugt werden.

Zur elastischen Membran 12 ist für alle Ausführungsbeispiele an dieser Stelle noch zu sagen, dass ihre elastischen Eigenschaften grundsätzlich so ausgewählt werden sollten, dass der Aufnahmeabschnitt 30 der elastischen Membran 12 zum einen die diskreten Punkte der Stiftenden 38 der einzelnen Stifte 36 der Abstützanordnung 24 der Aufnahme 10 auszugleichen vermag, so dass eine kontinuierliche Aufnahmefläche für die aufzunehmende Brillenlinse 14 entsteht. Zum anderen darf der Aufnahmeabschnitt 30 der elastischen Membran 12 aber auch nicht zu weich sein, um keine nennenswerte Bewegung der abgestützt gehaltenen Brillenlinse 14 auf der Aufnahme 10 zu ermöglichen und auch zu verhindern, dass sich die Funktionsmembran(en) 48 zur Außenseite 32 des Aufnahmeabschnitts 30 hin "durchdrückt/durchdrücken" und dann ggf. unerwünschte "Abbildungen" oder "Abdrücke" auf der an der Aufnahme 10 gehaltenen Brillenlinse 14 erzeugt/erzeugen, insbesondere wenn Letztere aus einem im Verhältnis weichen Kunststoffmaterial besteht.

Wie die von den Erfindern durchgeführten Versuche gezeigt haben, eignen sich besonders die Werkstoffe NBR (*Nitrile Butadiene Rubber*) oder EPDM (*Ethylen-Propylen-Dien*; *M-Gruppe*) für die Ausbildung der elastischen Membran 12, die vorzugsweise eine Härte nach SHORE A zwischen 30 und 80, mehr bevorzugt zwischen 40 und 60 besitzen sollte. Außerdem sollte die elastische Membran 12 im Bereich des Aufnahmeabschnitts 30 eine Materialstärke zwischen 1,0 mm und 4,0 mm, vorzugsweise zwischen 1,3 mm und 3,0 mm aufweisen.

Hinsichtlich der Funktionsmembran 48 kann für alle Ausführungsbeispiele schließlich noch gesagt werden, dass sich in den von den Erfindern durchgeführten Versuchen Funktionsmembranen 48 bewährt haben, die aus einem Gewebe aus PTFE (*Polytetrafluorethylen*) bestehen und mit einer hydrophoben und/oder oleophoben Beschichtung versehen sind. Hinsichtlich ihrer semipermeablen Funktion sollte(n) die Funktionsmembran(en) 48 einen Eindringwiderstand gegen Wasser größer gleich 0,7 bar, vorzugsweise größer gleich 0,8 bar, bestimmt nach ASTM D751, aufweisen. Was die Gasdurchlässigkeit angeht, sollte ein Luftdurchsatz bei einer Druckdifferenz von 70 mbar (1,0 psi) zwischen 10 und 100 L / (h x cm²), vorzugsweise zwischen 20 und 60 L / (h x cm²), bestimmt nach ASTM D737, möglich sein.

Eine elastische Membran für eine Aufnahme zur Bearbeitung von optischen Werkstücken ist über einen Befestigungsabschnitt zur Montage an einem Gehäuse der Aufnahme angepasst, um darin eine Kammer durch einen mit dem Befestigungsabschnitt verbundenen Aufnahmeabschnitt zu begrenzen. Letzterer hat eine Außenseite, auf der ein Werkstück mit einer Werkstückfläche flächig auflegbar ist, und eine Innenseite, die zur Anlage einer in der Kammer aufgenommenen Abstützanordnung für das Werkstück angepasst ist. Der Aufnahmeabschnitt besitzt als Bestandteil einer Halteanordnung für das Werkstück eine Perforation mit wenigstens einer Innenseite und Außenseite verbindenden Öffnung, über die ein an der Kammer angelegtes Vakuum auf die Außenseite führbar ist. Der Öffnung ist eine semipermeable, d.h. gasdurchlässige und flüssigkeitssperrende Funktionsmembran zugeordnet, welche sich lediglich lokal, in einem unmittelbar an der Öffnung angrenzenden Bereich erstreckt. Eine Aufnahme mit einer solchen elastischen Membran wird ebenfalls offenbart.

### BEZUGSZEICHENLISTE

- 10: Aufnahme
- 12: elastische Membran
- 14: Brillenlinse / optisches Werkstück
- 16: Werkstückfläche
- 18: Werkstückfläche
- 20: Werkstückrand
- 22: Halteanordnung
- 24: Abstützanordnung
- 26: Gehäuse
- 28: Befestigungsabschnitt
- 30: Aufnahmeabschnitt
- 32: Außenseite
- 34: Kammer
- 36: Stift
- 38: Stiftende
- 40: Innenseite
- 42: Klemmmechanismus
- 44: Perforation
- 46: Öffnung
- 48: Funktionsmembran
- 50: Faltenbalgabschnitt
- 52: Formring / Formteil
- 54: Wulst
- 56: Radialnut
- 58: Spannschelle
- 60: Hauptteil
- 62: Membranausschnitt
- 64: Aussparung
- 66: Klebstoffschicht
- 68: Rotationsmarkierung
- 70: Rotationsmarkierung
- 72: Tasche
- 74: Ringnut
- 76: Klebstoff
- 78: äußerer Öffnungsbereich
- 80: innerer Öffnungsbereich
- 82: kristallförmige Verteilungsstruktur
- 84: wabenförmige Verteilungsstruktur

- dₐ: Durchmesser des äußeren Öffnungsbereichs
- dᵢ: Durchmesser des inneren Öffnungsbereichs

- DB: Durchmesserbereich
- ES: Einsatz
- HA: Halter
- MA: Mittelachse
- ST: Steg
- TK1: Teilkreis
- TK2: Teilkreis
- VS: Vorsprung

## Patentansprüche

1. Elastische Membran (12) für eine Aufnahme (10) zur Bearbeitung von optischen Werkstücken (14), insbesondere Brillenlinsen, mit jeweils zwei Werkstückflächen (16, 18) und einem Werkstückrand (20) dazwischen, wobei die Membran (12) über einen Befestigungsabschnitt (28) zur Montage an einem Gehäuse (26) der Aufnahme (10) angepasst ist, um darin eine Kammer (34) durch einen mit dem Befestigungsabschnitt (28) verbundenen Aufnahmeabschnitt (30) zu begrenzen, welcher eine Außenseite (32), auf der ein zu bearbeitendes Werkstück (14) mit einer seiner Werkstückflächen (16, 18) flächig auflegbar ist, und eine Innenseite (40) aufweist, die zur Anlage einer in der Kammer (34) aufgenommenen Abstützanordnung (24) für das Werkstück (14) angepasst ist, wobei der Aufnahmeabschnitt (30) als Bestandteil einer Halteanordnung (22) für das Werkstück (14) eine Perforation (44) mit wenigstens einer die Innenseite (40) mit der Außenseite (32) verbindenden Öffnung (46) besitzt, über die ein an der Kammer (34) angelegtes Vakuum auf die Außenseite (32) führbar ist, und wobei der wenigstens einen Öffnung (46) eine semipermeable Funktionsmembran (48) zugeordnet ist, welche sich lediglich lokal, in einem unmittelbar an der Öffnung (46) angrenzenden Bereich erstreckt und die für Gas durchlässig ist, einem Flüssigkeitsdurchtritt durch die wenigstens eine Öffnung (46) indes entgegenwirkt.

2. Elastische Membran (12) nach Anspruch 1, wobei die wenigstens eine Öffnung (46) der Perforation (44) im Aufnahmeabschnitt (30)
in Längsrichtung gesehen querschnittsverschiedene Öffnungsbereiche (78, 80) aufweist und der Querschnitt des jeweiligen Öffnungsbereichs (78, 80) auf der Außenseite (32) des Aufnahmeabschnitts (30) kleiner ist als auf der Innenseite (40) des Aufnahmeabschnitts (30) und/oder
auf der Außenseite (32) des Aufnahmeabschnitts (30) einen im Wesentlichen runden Öffnungsbereich (78) besitzt, mit einem Durchmesser (dₐ) größer gleich 0,5 mm und kleiner gleich 3,0 mm, und/oder
auf der Innenseite (40) des Aufnahmeabschnitts (30) einen Öffnungsbereich (80) besitzt, der einen sternförmigen Querschnitt hat oder im Wesentlichen rund ist, mit einem Durchmesser (dᵢ) größer gleich 1,5 mm und kleiner gleich 4,0 mm, und/oder
in einem Durchmesserbereich (DB) kleiner gleich 45 mm bezüglich einer Mittelachse (MA) der elastischen Membran (12) im Aufnahmeabschnitt (30) ausgebildet ist und/oder
eine bezüglich der Mittelachse (MA) der elastischen Membran (12) zentrale Öffnung (46) und/oder zwischen 3 und 18 Öffnungen (46) im Aufnahmeabschnitt (30) umfasst, die um die Mittelachse (MA) der elastischen Membran (12) vorzugsweise gleichmäßig winkelabstandet voneinander auf wenigstens einem Teilkreis (TK1, TK2) verteilt sind, und/oder
nur eine oder wenige Öffnungen (46) umfasst, die auf der Außenseite (32) des Aufnahmeabschnitts (30) in einer in einer Draufsicht gesehen kristall- oder wabenförmigen Verteilungsstruktur (82, 84) aus flachen, furchenartigen Vertiefungen für das Vakuum münden.

3. Elastische Membran (12) nach Anspruch 2, wobei die Verteilungsstruktur (82, 84) für das Vakuum in einem Durchmesserbereich (DB) kleiner gleich 45 mm bezüglich der Mittelachse (MA) der elastischen Membran (12) auf der Außenseite (32) des Aufnahmeabschnitts (30) ausgebildet ist.

4. Elastische Membran (12) nach einem der vorhergehenden Ansprüche, wobei
die wenigstens eine Öffnung (46) der Perforation (44) im Aufnahmeabschnitt (30) eine Mehrzahl von Öffnungen (46) umfasst, denen jeweils eine Funktionsmembran (48) zugeordnet ist, und/oder
die oder jede Funktionsmembran (48) im Aufnahmeabschnitt (30) der elastischen Membran (12) integriert ist.

5. Elastische Membran (12) nach wenigstens den Ansprüchen 2 und 4, wobei die Funktionsmembran (48) die querschnittsverschiedenen Öffnungsbereiche (78, 80) der wenigstens einen Öffnung (46) trennt.

6. Elastische Membran (12) nach Anspruch 4 oder 5, wobei die elastische Membran (12) im Bereich des Aufnahmeabschnitts (30) wenigstens zweiteilig ausgebildet ist, mit einem größeren Hauptteil (60) und wenigstens einem kleineren Membranausschnitt (62), der in einer zugeordneten, komplementären Aussparung (64) des Hauptteils (60) eingesetzt und mit dem Hauptteil (60) unter Zwischenfügung der oder jeder Funktionsmembran (48) stoffschlüssig oder kraftschlüssig verbunden, vorzugsweise verklebt ist.

7. Elastische Membran (12) nach Anspruch 6, wobei
der Hauptteil (60) und der wenigstens eine Membranausschnitt (62) zueinander fluchtende Durchgänge aufweisen, die gemeinsam die wenigstens eine Öffnung (46) der Perforation (44) im Aufnahmeabschnitt (30) bilden, und/oder
der Hauptteil (60) und der wenigstens eine Membranausschnitt (62) zueinander passende Rotationsmarkierungen (68, 70) besitzen und/oder
der Hauptteil (60) auch den Befestigungsabschnitt (28) der elastischen Membran (12) umfasst und/oder
der Hauptteil (60) die Außenseite (32) des Aufnahmeabschnitts (30) der elastischen Membran (12) bildet.

8. Elastische Membran (12) nach Anspruch 6 oder 7, wobei in dem wenigstens einen Membranausschnitt (62) mindestens eine Tasche (72) zur Aufnahme der jeweiligen Funktionsmembran (48) ausgebildet ist.

9. Elastische Membran (12) nach Anspruch 8, wobei die mindestens eine Tasche (72) zur Aufnahme der jeweiligen Funktionsmembran (48) von einer Ringnut (74) umgeben ist, die der Aufnahme eines Klebstoffs (76) für die Funktionsmembran (48) dient.

10. Elastische Membran (12) nach einem der Ansprüche 1 bis 5, wobei die oder jede Funktionsmembran (48) im Material des Aufnahmeabschnitts (30) der elastischen Membran (12) eingebettet, vorzugsweise einvulkanisiert ist.

11. Elastische Membran (12) nach einem der vorhergehenden Ansprüche, wobei der Befestigungsabschnitt (28) ringförmig ausgebildet und der Aufnahmeabschnitt (30) über einen Falten- oder Rollbalgabschnitt (50) mit dem Befestigungsabschnitt (28) verbunden ist.

12. Elastische Membran (12) nach Anspruch 11, wobei der Falten- oder Rollbalgabschnitt (50) radial außerhalb der Innenseite (40) des Aufnahmeabschnitts (30) durch wenigstens ein elastisch verformbares Formteil (52), insbesondere einen Formring aus einem Schaumstoffmaterial gestützt ist.

13. Elastische Membran (12) nach einem der vorhergehenden Ansprüche, wobei die elastische Membran (12)
aus NBR oder EPDM besteht und/oder
eine Härte nach SHORE A zwischen 30 und 80, vorzugsweise zwischen 40 und 60 besitzt und/oder
im Bereich des Aufnahmeabschnitts (30) eine Materialstärke zwischen 1,0 mm und 4,0 mm, vorzugsweise zwischen 1,3 mm und 3,0 mm aufweist.

14. Elastische Membran (12) nach einem der vorhergehenden Ansprüche, wobei die Funktionsmembran (48)
aus einem PTFE-Gewebe besteht und/oder
mit einer hydrophoben und/oder oleophoben Beschichtung versehen ist und/oder
einen Eindringwiderstand gegen Wasser größer gleich 0,7 bar, vorzugsweise größer gleich 0,8 bar, bestimmt nach ASTM D751, aufweist, und/oder
einen Luftdurchsatz bei einer Druckdifferenz von 70 mbar (1,0 psi) zwischen 10 und 100 L / (h x cm²), vorzugsweise zwischen 20 und 60 L / (h x cm²), bestimmt nach ASTM D737, hat.

15. Aufnahme (10) für die Bearbeitung von optischen Werkstücken (14), insbesondere Brillenlinsen, mit jeweils zwei Werkstückflächen (16, 18) und einem Werkstückrand (20) dazwischen, umfassend ein Gehäuse (26) mit einer Halteanordnung (22) für ein zu bearbeitendes Werkstück (14) sowie einer Abstützanordnung (24) hierfür, die eine Vielzahl von in einer im Gehäuse (26) vorgesehenen Kammer (34) aufgenommenen, mindestens zum Großteil separat längsverschiebbaren Stiften (36) aufweist, welche wahlweise gegen eine Längsverschiebung bezüglich des Gehäuses (26) durch einen Klemmmechanismus (42) festlegbar sind und mit ihren Stiftenden (38) dazu dienen, das mit einer seiner Werkstückflächen (16, 18) über die Halteanordnung (22) an der Aufnahme (10) gehaltene Werkstück (14) an der den Stiftenden (38) zugewandten Werkstückfläche (16, 18) nach Maßgabe deren Geometrie flächig und fest abzustützen, wobei an dem Gehäuse (26) der Aufnahme (10) die elastische Membran (12) nach einem der vorhergehenden Ansprüche montiert ist, die zusammen mit dem Gehäuse (26) die Kammer (34) begrenzt und in deren Aufnahmeabschnitt (30) die Perforation (44) als Bestandteil der Halteanordnung (22) ausgebildet ist, so dass ein an der Kammer (34) angelegtes Vakuum über die Perforation (44) auf der Außenseite (32) des Aufnahmeabschnitts (30) zum Halten des Werkstücks (14) ansteht.
